# EUROPÄISCHE PATENTSCHRIFT

(11) **EP 2 607 044 B1**
(45) Veröffentlichungstag und Bekanntmachung des Hinweises auf die Patenterteilung: **16.03.2016**
(21) Anmeldenummer: 12196753.3
(22) Anmeldetag: 12.12.2012
(51) Int. Cl.: B29C 45/17, B29C 45/26

(54) **Spritzgusswerkzeug und Verfahren zur Umrüstung eines solchen Spritzgusswerkzeugs in einer Spritzgussmaschine**
Injection moulding die and method for retrofitting such a moulding die in an injection molding machine
Outil de moulage par injection et procédé de rééquipement d'un tel outil de moulage par injection dans une machine de moulage par injection

(30) Priorität: 20.12.2011 DE 102011056694
(43) Veröffentlichungstag der Anmeldung: 26.06.2013
(73) Patentinhaber: Wago Verwaltungsgesellschaft mbH, 32423 Minden (DE)
(72) Erfinder: Sudermann, Alexander, 32479 Hille (DE)
(74) Vertreter: Gerstein, Hans Joachim

(56) Entgegenhaltungen:
- EP-A1- 1 110 692
- EP-A1- 1 110 692
- DE-A1-102006 046 528
- US-A- 5 350 289
- US-A1- 2006 082 028
- US-A1- 2010 229 365
- US-B1- 7 204 685

## Beschreibung

Die Erfindung betrifft ein Spritzgusswerkzeug für eine Schließeinheit einer Spritzgussmaschine zur Herstellung von Spritzguss-Formteilen mit einem Rahmenwerkzeug, bestehend aus einer ersten, düsenseitigen Werkzeughälfte zum Anbau an eine düsenseitige, feste Aufspannplatte der Schließeinheit einer Spritzgussmaschine und einer zweiten, auswerferseitigen Werkzeughälfte zum Anbau an eine auswerferseitige bewegliche Aufspannplatte der Schließeinheit der Spritzgussmaschine, wobei die erste, düsenseitige Werkzeughälfte mindestens eine mit einer an die düsenseitige Aufspannplatte anschließbaren Maschinendüse der Spritzgussmaschine zusammenwirkende Spritzgussmaterial-Verteileinheit mit einem Verteilerkanal und mindestens einer von der ersten, düsenseitigen Werkzeughälfte in Richtung der zweiten, auswerferseitigen Werkzeughälfte herausragenden Spritzgussdüse, wobei der Verteilerkanal von einer Einlassöffnung zum Anschluss der Maschinendüse der Spritzgussmaschine zu der mindestens einen Spritzgussdüse führt, und die zweite, auswerferseitige Werkzeughälfte mindestens eine Auswerfereinheit hat, und wobei mindestens ein jeweils aus zwei Formeinsatzhälften gebildeter Formeinsatz mit mindestens einer auf ein Formteil angepassten Kavität vorgesehen ist, wobei die erste, düsenseitige Formeinsatzhälfte eines Formeinsatzes zur Verbindung mit der ersten, düsenseitigen Werkzeughälfte und die zweite, auswerferseitige Formeinsatzhälfte desselben Formeinsatzes zur Verbindung mit der zweiten, auswerferseitigen Werkzeughälfte angepasst ist.

Die Erfindung betrifft weiterhin ein Verfahren zur Umrüstung eines solchen Spritzgusswerkzeuges an einer Spritzgussmaschine.

Für die preiswerte Serienherstellung von Formteilen im Spritzguss, insbesondere von Kunststoffformteilen, werden Spritzgießmaschinen eingesetzt, die aus einer zur Aufbereitung des Rohmaterials und Einspritzen des Spritzgussmaterials unter Druck in ein Spritzgusswerkzeug ausgebildete Spritzeinheit und eine das Spritzgusswerkzeug aufnehmende und zum Öffnen und Schließen vorgesehene Schließeinheit hat. Die Spritzeinheit hat in der Regel eine Schneckenwelle, die in einem Zylinder rotierbar geführt ist und im hinteren Bereich einen Granulateinlass und am vorderen, freien Ende eine Maschinendüse hat. Das in der Schnecke aufgeschmolzene Spritzgussmaterial wird durch die Maschinendüse in das Spritzgusswerkzeug gespritzt. Die Schließeinheit hat eine auf einem Maschinenrahmen senkrecht angeordnete, düsenseitige Aufspannplatte, die eine düsenseitige Werkzeughälfte trägt. Weiterhin hat die Schließeinheit eine gegenüberliegende, in Richtung der festen Aufspannplatte in der Regel hydraulisch bewegliche Aufspannplatte, die eine auswerferseitige Werkzeughälfte des Spritzgusswerkzeugs trägt. Der Maschinenraum kann eine weitere feste Stirnplatte haben, wobei ein Schließaktor, wie z. B. mindestens ein Hydraulik-Zylinder, zwischen der Stirnplatte und der beweglichen Aufspannplatte zum Öffnen und Schließen der beweglichen Aufspannplatte vorhanden ist.

Für jedes Formteil ist nun ein individualisiertes Spritzgusswerkzeug mit individualisierten Kavitäten und einer individualisierten Auswerfermechanik erforderlich.

US 7,204,685 B1 schlägt zur schnellen und wirtschaftlichen Herstellung von individualisierten Spritzgusswerkzeugen ein modulares Spritzgusswerkzeug vor, bei dem anstelle von monolithischen Werkzeugplatten Rahmenplatten zur Aufnahme verschiedener Formeinsätze vorgesehen sind. Die Formeinsätze haben individualisierte Kavitäten und daran angepasste individualisierte Auswerferelemente. Die beiden Hälften eines Formeinsatzes werden separat voneinander gehandhabt und mit der jeweiligen düsenseitigen bzw. auswerferseitigen Werkzeughälfte beim Umrüsten verbunden.

In entsprechender Weise sind solche modularen Formeinsätze auch in der US 4,202,522 A und US 3,871,611 A sowie in der WO 00/38899 A1 beschrieben.

Aus der DE 10 2005 023 147 A1 ist ein Formwerkzeug zur Herstellung von Spritzgusskunststoffteilen mit einer Kavität, die mit einer Kunststoffspritzdüse verbindbar ist, sowie mit Kühlmittelführungen und eine Auswerfereinheit umfassenden Werkzeugteilen, von denen einzelne lösbar voneinander festlegbar sind, beschrieben. Das Formwerkzeug ist als ein Modulwerkzeug für ein nach vorgebbaren Parametern standardisiertes Stammwerkzeug ausgebildet. Das Stammwerkzeug hat standardisierte Anstandardisierten Anschluss- und Verbindungselemente angepassten, lösbar mit dem Stammwerkzeug verbindbaren Formeinsatz, der eine individualisierte Kavität aufweist.

US 2006/0082028 A1 offenbart ein Spritzgusswerkzeug, bei dem mehrere Heißkanalplatten hintereinander lösbar in die Spritzgussmaschine eingebaut werden können. Die Maschinendüse erstreckt sich dabei in mindestens die erste Heißkanalplatte und das Spritzgussmaterial wird durch ein Angussrohr weiter an die weiteren Heißkanalplatten verteilt. Zwischen zwei beabstandete Heißkanalplatten lässt sich ein aus zwei Hälften bestehender Formeinsatz einbauen.

US 2010/0229365 A1 beschreibt ein Montagehilfswerkzeug zur Montage von Formeinsätzen in eine Spritzgussbasis. Eine Kavitäten aufweisende Formeinsatzhälfte wird dabei an einem Träger befestigt und mit dem Träger zwischen eine Auswerfereinheit und eine Rahmeneinheit zur Aufnahme der Formeinsätze angeordnet. Danach wird die Spritzgussmaschine geschlossen und die Formeinsatzhälfte in den Rahmeneinsatz eingebaut. Das Montagehilfswerkzeug wird anschließend wieder abgenommen.

US 5,350,289 A beschreibt ein Schnellwechselsystem für Standard-Spritzgusswerkzeuge in einer Spritzgussmaschine. Dabei werden Adapterplatten an die Aufspannplatten der Spritzgussmaschine angebracht. Ein Standard-Spritzgusswerkzeug mit Öffnungen zur Aufnahme der Maschinendüse und mit Auswerfermechaniken sowie mit mindestens einer individualisierten Kavität wird dann an den Adapterplatten angebracht.

Ausgehend hiervon ist es Aufgabe der vorliegenden Erfindung ein verbessertes Spritzgusswerkzeug zu schaffen, mit dem der Umrüstvorgang beschleunigt und die Herstellung von an individuelle Formteile angepassten Spritzgusswerkzeugen vereinfacht wird.

Die Aufgabe wird mit dem Spritzgusswerkzeug mit den Merkmalen des Anspruchs 1 sowie durch das Verfahren mit den Merkmalen des Anspruchs 16 gelöst.

Vorteilhafte Ausführungsformen sind in den Unteransprüchen beschrieben.

Es wird ein Spritzgusswerkzeug vorgeschlagen, bei dem Formeinsatzhälften des mindestens einen Formeinsatzes in Einschubrahmen eingebaut sind und die Einschubrahmen zu einem von dem Rahmenwerkzeug abnehmbaren Einschubmodul miteinander verbindbar sind. Der düsenseitige Einschubrahmen hat mindestens eine Düsenöffnung zur Aufnahme jeweils einer zugeordneten Spritzgussdüse der Spritzgussmaterial-Verteileinheit, die an der ersten düsenseitigen Werkzeughälfte angeordnet ist.

Im Unterschied zu herkömmlichen Spritzgusswerkzeugen, bei denen die düsenseitigen und auswerferseitigen Werkzeughälften nach Öffnen der Schließeinheit einer Spritzgussmaschine separat abgeschraubt und gehandhabt werden oder die düsenseitigen und auswerferseitigen Werkzeughälften mitsamt der darin eingebauten Formeinsätze insgesamt als individualisierter Werkzeugblock beim Umrüsten von den Aufspannplatten von der Spritzgussmaschine abgenommen werden, ist vorliegend ein Einschubmodul vorgesehen, das in die düsenseitigen und auswerferseitigen Werkzeughälften eingeführt wird und die individualisierten Formeinsätze trägt. Dieses Einschubmodul bildet damit ein zur Herstellung spezifischer Formteile individualisiertes Werkzeugpaket, während die düsenseitigen und auswerferseitigen Werkzeughälften standardisiert sind und im Umrüstvorgang mit den Aufspannplatten der Spritzgussmaschine verbunden bleiben. Die düsenseitigen und auswerferseitigen Werkzeughälften können damit auch für andere Einschubmodule genutzt werden, was einerseits die Herstellung der individualisierten Einschubmodule vereinfacht und beschleunigt, da keine Anpassung der Werkzeughälften erforderlich ist, und andererseits den Umrüstvorgang beschleunigt. Während des Umrüstvorgangs können die Werkzeughälften nämlich temperiert bleiben und müssen nicht von den Versorgungsleitungen abgeklemmt werden.

Insbesondere bleibt ein an sich bekannter Heißkanalverteilerbalken mit den dazu gehörigen Heißkanaldüsen des Spritzgusswerkzeuges im Rahmenwerkzeug und braucht nicht von den Versorgungsleitungen abgeklemmt zu werden, so dass sie aufgeheizt bleiben können. Dies reduziert die Wiederanlaufzeit.

Auf der anderen Seite werden die individualisierte Kavitäten aufweisenden Formeinsätze auch nicht düsenseitig und auswerferseitig separat gehandhabt, sondern sind durch die Einschubrahmen zu einem kompakten Einschubmodul zusammengefasst, das insgesamt beim Umrüsten aus den Werkzeughälften entnommen wird.

Die Handhabung der Formeinsatzhälften des mindestens einen Formeinsatzes als kompaktes, von den Werkzeughälften leicht abnehmbares Einschubmodul gelingt durch den Einbau der Formeinsatzhälften in Einschubrahmen und durch geeignete Verbindungsmittel, wie Gewindebohrungen. Die Einschubrahmen sind mit Hilfe der Gewindebohrungen mit einer aufschraubbaren Verbinderbrückerplatte für den Umrüstvorgang zu einem kompakten Einschubmodul verbindbar sind. Beispielsweise durch eine Öse an der Verbinderbrückerplatte lässt sich das Einschubmodul dann leicht handhaben und aus der Schließeinheit der Spritzgussmaschine herausheben. In Betrieb müssen die Formeinsatzhälften und Einschubrahmen hingegen voneinander getrennt sein, um die auswerferseitige und düsenseitige Formeinsatzhälfte voneinander lösen zu können, so dass eine Entnahme des mindestens einen hergestellten Formteils möglich wird.

Besonders vorteilhaft ist es, wenn die zweite, auswerferseitige Formeinsatzhälfte eine verschiebbar gelagerte Auswerferplatte hat. Der auswerferseitige Einschubrahmen des Einschubmoduls hat dann mindestens eine Öffnung zur Aufnahme der Auswerferplatte einer zugeordneten zweiten, auswerferseitigen Formeinsatzhälfte, deren Auswerferplatte somit in den auswerferseitigen Einschubrahmen hineinragt. Beim Einbau des auswerferseitigen Einschubrahmens an die auswerferseitige Werkzeughälfte kann dann die Auswerferplatte mit einer Auswerfereinheit der auswerferseitigen Werkzeughälfte zusammenwirken. Die Auswerfereinheit der auswerferseitigen Werkzeughälfte ist damit standardmäßig vorgesehen und die Auswerferplatte bildet eine Schnittstelle von individuellen an ein Formteil angepassten Auswerferelementen der auswerferseitigen Formeinsatzhälfte, die über die Auswerferplatte von der Auswerfereinheit der auswerferseitigen Werkzeughälfte betätigt werden.

Die auswerferseitige Formeinsatzhälfte ist zudem mit dem auswerferseitigen Einschubrahmen verbunden und hierzu vorzugsweise lösbar mit dem auswerferseitigen Einschubrahmen verschraubt.

Die mindestens eine erste, düsenseitige Formeinsatzhälfte ist hingegen vorteilhaft mit dem düsenseitigen Einschubrahmen verbunden. Dabei ist die düsenseitige Formeinsatzhälfte vorzugsweise mit dem düsenseitigen Einschubrahmen lösbar verschraubt. Der düsenseitige Einschubrahmen hat vorzugsweise mindestens eine Düsenöffnung zur Aufnahme jeweils einer zugeordneten Spritzgussdüse der düsenseitigen Werkzeughälfte. Der auswerferseitige Einschubrahmen hat vorzugsweise mindestens einen hervorstehenden Spritzguss-Verteilerkopf, der zur Anordnung gegenüberliegend zu einer zugeordneten Spritzgussdüse ausgerichtet und an seinem freien Kopfende Kanäle zum Leiten von aus der zugeordneten Spritzgussdüse austretenden Spritzgussmaterials in Kavitäten von mindestens einem Formeinsatz hat.

Die Maschinendüse der Spritzgussmaschine wird vor die düsenseitige Werkzeughälfte gefahren und das aus der Maschinendüse austretende, von der Maschinenschnecke extrudierte Spritzgussmaterial wird durch einen Verteilerbalken im Heißkanalverteilerblock, d.h. durch die Spritzgussmaterial-Verteileinheit, in die mindestens eine von der düsenseitigen Werkzeughälfte abstehende Spritzgussdüse geleitet. Beim Schließen der Schließeinheit im Betrieb wird das freie Ende der mindestens einen Spritzgussdüse dann an das freie Ende eines vom auswerferseitigen Einschubrahmen hervorstehenden Spritzguss-Verteilkopfes geführt, so dass das aus der mindestens einen Spritzgussdüse austretende Spritzgussmaterial über Kanäle an dem freien Kopfende des hervorstehenden Spritzguss-Verteilerkopfes in zugeordnete Kavitäten geleitet wird. Mit Hilfe eines solchen Spritzguss-Verteilerkopfes ist eine Anpassung der Führung des Spritzgussmaterials in individualisierte Kavitäten durch Anpassung des Spritzguss-Verteilerkopfes möglich. Die mindestens eine Spritzgussdüse der standardisierten düsenseitigen Werkzeughälfte wird dabei von einer Düsenöffnung des düsenseitigen Einschubrahmens aufgenommen. Für den Fall, dass der Einschubrahmen mehrere Fächer zur Aufnahme von mehreren Formeinsätzen hat, ist es mit Hilfe des Spritzguss-Verteilerkopfes möglich ggf. einige Fächer des Einschubrahmens unbesetzt zu lassen oder abzusperren und den Spritzgussvorgang nur mit einer reduzierten Anzahl der möglichen Anzahl von Formeinsätzen oder Kavitäten durchzuführen.

Vorteilhaft können somit auch verschiedene herkömmliche Spritzgusstechniken verwendet werden. So kann neben einer Direkteinspritzung auch eine Nadelantriebstechnik, bei welcher die Düse mit einer angetriebenen Nadel verschlossen wird, mit den dazu gehörigen Steuereinheiten zum Einsatz kommen.

Besonders vorteilhaft ist es, wenn der Spritzguss-Verteilerkopf einen linear beweglich in oder auf dem Spritzguss-Verteilerkopf angeordneten Angussauswerfer hat. Der Anguss aus Spritzgussmaterial bei der Herstellung von Spritzgussformteilen kann somit leicht mittels eines in oder auf dem Spritzguss-Verteilerkopf geführten Angussauswerfers ausgestoßen werden. Dieser Angussauswerfer ist dabei vorzugsweise verzögert aktivierbar, nachdem die Auswerferelemente der Formeinsätze die Formteile selbst ausgeworfen haben.

Besonders vorteilhaft ist es, wenn der Spritzguss-Verteilerkopf drehbar zur Anpassung der Ausrichtung der am freien Kopfende angeordneten Kanäle ist. Auf diese Weise kann die Ausrichtung der Kanäle auf die Anordnung der Kavitäten in den Formeinsätzen sowie auf die jeweilige Bestückung der Fächer der Einschubrahmen mit Formeinsätzen eingestellt werden. Eine Absperrung einzelner Kavitäten ist möglich.

Besonders vorteilhaft ist es, wenn sich beidseits von der ersten oder zweiten Werkzeughälfte Führungsprofile in Richtung der anderen Werkzeughälfte erstrecken und die andere Werkzeughälfte an den Führungsprofilen linear verschiebbar geführt ist. Das Einschubmodul ist dann in den Zwischenraum zwischen der ersten und zweiten Werkzeughälfte und dem beidseits sich zwischen erster und zweiter Werkzeughälfte erstreckenden Führungsprofilen einführbar. Mit Hilfe dieser seitlichen Führungsprofile, die vorzugsweise im Querschnitt rechteckig sind, wird eine zuverlässige Linearführung von erster, düsenseitiger und zweiter, auswerferseitiger Werkzeughälfte beim Öffnen und Schließen der Schließeinheit unter Einsparung von Bauraum erreicht und größtmöglicher Raum für das Einführen des Einschubmoduls in den Zwischenraum zwischen den Führungsprofilen bereitgestellt.

Eine Überprüfung, ob die Schließkraft ausreichend ist, gelingt bei dieser Ausführungsform mit beidseitigen Führungsprofilen auf besonders zuverlässige und einfache Weise durch mindestens eine Messeinheit, die an einer Seitenwand einer Werkzeughälfte angeordnet und auf das freie Ende eines zugeordneten Führungsprofils, das fest mit einer anderen Werkzeughälfte verbunden ist und sich in Richtung der Messeinheit erstreckt, ausgerichtet ist. Der Abstand zwischen beweglichem und festem Teil des Spritzgusswerkzeuges kann dann durch die Messeinheit mit Hilfe des Abstands zwischen dem freien Ende des zugeordneten Führungsprofils und der Messeinheit optimal bestimmt werden. Im Betrieb zeigt eine Änderung des Abstands an, dass der eingestellte Schließdruck nicht ausreicht.

Weiterhin ist es vorteilhaft, wenn sich von dem unteren Bereich einer Werkzeughälfte Führungsprofile in Richtung der anderen Werkzeughälfte erstrecken und die andere Werkzeughälfte gleitend verschiebbar auf oder an den Führungsprofilen gelagert und von den Führungsprofilen im Umrüstvorgang mindestens teilweise getragen ist. Damit bleiben die erste und zweite Werkzeughälfte im Umrüstvorgang blockartig aufeinander abgestützt, so dass das Einschubmodul, das zwischen erster, düsenseitiger Werkzeughälfte und zweiter, auswerferseitiger Werkzeughälfte angeordnet ist, von den beiden Werkzeughälften nach oben herausgezogen werden kann, ohne die sichere Lagerung der Werkzeughälften zu beeinträchtigen.

In einer weiterhin bevorzugten Ausführungsform hat die zweite, auswerferseitige Werkzeughälfte eine Standard-Auswerfereinheit mit standardisierten beweglichen Auswerferelementen, die sich zur Betätigung mindestens einer individualisierten Auswerfereinheit des mindestens einen zugeordneten Formeinsatzes in Richtung der ersten, düsenseitigen Werkzeughälfte beweglich erstrecken. Bei dieser Standard-Auswerfereinheit kann es sich beispielsweise um elektromechanisch oder hydraulisch linear beweglich in einer Auswerferplatte der auswerferseitigen Werkzeughälfte gelagerte Auswerferstößel handeln, deren freies Kopfende auf Auswerferplatten eines zugeordneten auswerferseitigen Formeinsatzhälfte stoßen und diese linear verschieben.

Vorteilhaft ist es weiterhin, wenn die erste, düsenseitige Werkzeughälfte einen standardisierten Heißkanalverteilerbalken zum Aufbereiten des Spritzgussmaterials mit mindestens einer in Richtung der zweiten, auswerferseitigen Werkzeughälfte herausragenden Spritzgussdüse und mit einem von einer Einlassöffnung zum Anschluss der Maschinendüse der Spritzgussmaschine zu der mindestens einen Spritzgussdüse führenden Verteilerkanal hat. Damit wird nicht die Maschinendüse direkt zur Einleitung von extrudiertem Spritzgussmaterial in die mindestens eine Kavität genutzt, sondern es ist eine standardisierte Spritzgussmaterial-Verteilereinheit (Heißkanalverteilerbalken) mit mindestens einer vorstehenden Spritzgussdüse an der düsenseitigen Werkzeughälfte vorgesehen, die mit dem individualisierten Einschubmodul zusammenwirkt. Auf diese Weise ist es möglich, ein modulares System zu schaffen, bei dem beispielsweise eine standardisierte erste, düsenseitige Werkzeughälfte mit einer einzigen Spritzgussdüse vorgesehen ist, die mit Einschubrahmen für ein bis vier Formeinsätzen zusammenwirkt.

Es kann aber auch eine erste, düsenseitige Werkzeughälfte mit zwei übereinander oder nebeneinander angeordneten Spritzgussdüsen vorgesehen sein, die mit ein bis acht Formeinsätzen zusammenwirkt.

Denkbar ist weiterhin, dass eine düsenseitige Werkzeughälfte vier, sechs oder mehr symmetrisch angeordnete Spritzgussdüsen hat und ein individualisiertes Einschubmodul an eine dieser Varianten der standardisierten düsenseitigen Werkzeughälften nach Bedarf und Größe der Formteile und damit zugeordneten Formeinsätze angepasst ist.

Zur Vereinfachung des Umrüstvorgangs hat die erste, düsenseitige Werkzeughälfte vorzugsweise angrenzend an das Einschubmodul eine düsenseitige Formplatte, die mit mindestens einer weiteren Platte der ersten, düsenseitigen Werkzeughälfte verbindbar und wahlweise für den Umrüstvorgang von der mindestens einen weiteren Platte der ersten, düsenseitigen Werkzeughälfte lösbar und unter Belassung eines Zwischenraums für das Einschubmodul mit der zweiten, auswerferseitigen Werkzeughälfte verbindbar ist. Durch das Verbinden der düsenseitigen Formplatte mit der auswerferseitigen Werkzeughälfte im Umrüstvorgangs wird ein definierter begrenzter Zwischenraum für das Einführen des Einschubmoduls bereitgestellt, das zwischen düsenseitiger Formplatte und freier Oberfläche der auswerferseitigen Werkzeughälfte eingeschoben wird. Mit Hilfe dieser wahlweise im Umrüstvorgang mit der auswerferseitigen Werkzeughälfte und für den Spritzgussprozess mit den weiteren Platten der düsenseitigen Werkzeughälfte verbindbaren düsenseitigen Formplatte gelingt eine einfache und schnelle Umrüstung des Einschubmoduls.

Vorzugsweise ist dabei beidseits der düsenseitigen Formplatte jeweils ein verschwenkbarer Verriegelungshebel zur Verriegelung der düsenseitigen Formplatte wahlweise mit einer weiteren Platte der ersten, düsenseitigen Werkzeughälfte oder mit einer zweiten, auswerferseitigen Werkzeughälfte angeordnet.

Die Formeinsatzhälften haben vorzugsweise Temperierkanäle mit damit kommunizierenden Ein- und Auslässen von Fluid zur Kühlung oder Erwärmung des Formeinsatzes. Beim Umrüsten des Einschubmoduls sind die Versorgungsleitungen von den Formeinsatzhälften zu trennen.

Vorteilhafterweise ist eine standardisierte Mehrzahl von Ein-/Auslassöffnungen an unterschiedlichen Positionen der Temperierkanäle vorgesehen. Ein solcher standardisierter Formeinsatz kann dann individuell an eine Kavität angepasst werden, indem zur individuellen Anpassung der Fluidführung in einem Formeinsatz an eine individuelle Kavität standardisierte Ein-/Auslassöffnungen mit Rohranschlussstutzen als Ein- und Auslässe nutzbar und die weiteren Ein-/Auslassöffnungen verschließbar sind. Mit Hilfe solcher, zunächst einmal standardisiert hergestellter Formeinsätze können auf schnelle und einfache Weise individuelle Formeinsätze geschaffen werden indem Kavitäten in die Formeinsatzhälften eingebracht und die standardisierten Temperierkanäle auf diese Kavität abgestimmt werden. Dabei ist es nicht unbedingt notwendig, weitere Temperierkanäle einzubringen. Oftmals reicht es aus, den Fluss und die Flussrichtung des Fluids durch geeignete Auswahl der bereits vorgesehenen standardisierten Ein-/Auslassöffnungen an den Bedarf anzupassen.

Besonders vorteilhaft ist es, wenn die Formeinsätze beweglich gelagerte Schieberelemente zur Entformung von Hinterschnitten aufweisenden Formteilen haben. Auch diese Schieberelemente können bereits standardmäßig in einem standardisierten Formeinsatz vorhanden und zur Individualisierung später nur noch an die gewünschte Kontur angepasst werden. Dies gelingt unter Beibehaltung der beweglich gelagerten Schieberelementen und einer standardisierten Kinematik oftmals durch Anbringen individualisierter Schiebereinsätze an standardisierte Schieberelemente.

Zur Reduzierung des Wärmetransfers ist es vorteilhaft, wenn zwischen den Einschubrahmen und den benachbarten Formeinsätzen wärmeisolierende Platten, wärmeisolierende Zwischenlagen und / oder Abstandsplatten angeordnet sind.

Ein einfaches und schnelles Umrüsten eines oben beschriebenen Spritzgusswerkzeuges an einer Spritzgussmaschine gelingt durch die Schritte:
- Öffnen der Schließeinheit durch Verfahren der zweiten, auswerferseitigen Werkzeughälfte in eine Richtung weg von der ersten, düsenseitigen Werkzeughälfte;
- Lösen des düsenseitigen Einschubrahmens von der ersten, düsenseitigen Werkzeughälfte und des auswerferseitigen Einschubrahmens von der zweiten, auswerferseitigen Werkzeughälfte;
- Schließen der Schließeinheit der Spritzgussmaschine durch Verfahren der zweiten, auswerferseitigen Werkzeughälfte in Richtung der ersten, düsenseitigen Werkzeughälfte;
- Abkoppeln einer düsenseitigen Formplatte der ersten, düsenseitigen Werkzeughälfte von den weiteren Elementen der ersten, düsenseitigen Werkzeughälfte und Ankoppeln dieser düsenseitigen Formplatte an die zweite, auswerferseitige Werkzeughälfte;
- Öffnen der Schließeinheit durch Verfahren der zweiten, auswerferseitigen Werkzeughälfte in eine Richtung weg von der ersten, düsenseitigen Werkzeughälfte;
- Herausheben des durch Setzen einer Brücke zwischen den Einschubrahmen gebildeten Einschubmoduls aus dem Rahmenwerkzeug;
- Einführen eines anderen Einschubmoduls in das Rahmenwerkzeug;
- Schließen der Schließeinheit durch Verfahren der zweiten, auswerferseitigen Werkzeughälfte in Richtung der ersten, düsenseitigen Werkzeughälfte;
- Abkoppeln der düsenseitigen Formplatte von der zweiten, auswerferseitigen Werkzeughälfte und Ankoppeln der düsenseitigen Formplatte an die erste, düsenseitigen Werkzeughälfte;
- Öffnen der Schließeinheit nach Lösen der Brücke zur Vereinzelung der Einschubrahmen durch Verfahren der zweiten, auswerferseitigen Werkzeughälfte in eine Richtung weg von der ersten, düsenseitigen Werkzeughälfte; und
- Verbinden des düsenseitigen Einschubrahmens mit der ersten, düsenseitigen Werkzeughälfte und des auswerferseitigen Einschubrahmens mit der zweiten, auswerferseitigen Werkzeughälfte.

Die Erfindung wird nachfolgend anhand eines Ausführungsbeispiels mit den beigefügten Zeichnungen näher erläutert. Es zeigen:
- Figur 1 -: Perspektivische Ansicht eines Spritzgusswerkzeug im geschlossenen Zustand;
- Figur 2 -: Perspektivische Ansicht des Spritzgusswerkzeuges aus Figur 1 im geöffneten Zustand mit herausgehobenem Einschubmodul;
- Figur 3 -: Seitenansicht des geschlossenen Spritzgusswerkzeuges aus Figur 1 in Seitenansicht ohne Einschubmodul;
- Figur 4 -: Seitenansicht des im Umrüstvorgangs geöffneten Spritzgusswerkzeuges ohne Einschubmodul;
- Figur 5 -: Perspektivische Ansicht auf die zweite, auswerferseitige Werkzeughälfte;
- Figur 6 -: Perspektivische Ansicht der Auswerfereinheit der zweiten, auswerferseitigen Werkzeughälfte aus Figur 5;
- Figur 7 -: Perspektivische Ansicht der auswerferseitigen Formplatte der zweiten, auswerferseitigen Werkzeughälfte mit Vertiefungen zur Aufnahme elektrischer Ausstattung einschließlich Sensoren;
- Figur 8 -: Perspektivische Ansicht auf die düsenseitige Werkzeughälfte;
- Figur 9 -: Perspektivische Ansicht der düsenseitigen Werkzeughälfte aus Figur 8 mit abgenommener düsenseitiger Formplatte;
- Figur 10 -: Seitenansicht des Einschubmoduls mit düsenseitigem und auswerferseitigem Einschubrahmen;
- Figur 11 -: Perspektivische Ansicht des auswerferseitigen Einschubrahmens des Einschubmoduls aus Figur 10;
- Figur 12 -: Perspektivische Ansicht des düsenseitigen Einschubrahmens des Einschubmoduls aus Figur 10;
- Figur 13 -: Perspektivische Ansicht von vier Formeinsätzen jeweils bestehend aus zwei Formeinsatzhälften zum Einbau in den Einschubrahmen aus Figur 10;
- Figur 14 -: Perspektivische Ansicht eines Formeinsatzes von der Versorgungsanschlussseite;
- Figur 15 -: Perspektivische Ansicht des Formeinsatzes aus Figur 14 von der Einspritzseite;
- Figur 16 -: Draufsicht auf einen Teil der auswerferseitigen Formeinsatzhälfte mit darin eingebrachten Temperierkanälen und Ein-/Auslassöffnungen mit daran angebrachten Anschlussstutzen;
- Figur 17 -: Draufsicht auf einen Teil der düsenseitigen Formeinsatzhälfte mit darin eingebrachten Temperierkanälen und standardisierten Ein-/Auslassöffnungen und daran angebrachten Anschlussstutzen;
- Figur 18 -: Perspektivische Ansicht des düsenseitigen Formeinsatzes;
- Figur 19 -: Skizze eines Formeinsatzes in Querschnittsansicht mit einer einfachen Auswerfereinheit gemäß einer ersten Ausführungsform;
- Figur 20 -: Skizze eines Formeinsatzes mit einer zweistufigen Auswerfereinheit gemäß einer zweiten Ausführungsform in Querschnittsansicht;
- Figur 21 -: Seitenansicht eines Spritzguss-Verteilerkopfes mit daran linear beweglich angeordnetem Angussauswerfer;
- Figuren 22a) + b) -: Skizze von zwei Formeinsatzhälften eines Formeinsatzes mit Schieberelementen;
- Figuren 23a) + b) -: Skizze der Anordnung von mindestens einer Spritzgussdüse der düsenseitigen Werkzeughälfte zur gemeinsamen Nutzung für zwei ne-beneinander angeordnete Formeinsätze;
- Figuren 24a) + b)-: Skizze der Anordnung von mindestens zwei Spritzgussdüsen jeweils zur Nutzung für einen zugeordneten Formeinsatz;
- Figuren 25a) +b) -: Skizze der Anordnung von mindestens zwei Spritzgussdüsen der düsenseitigen Werkzeughälfte unter Verwendung von zwei Spritzguss-düsen pro Formeinsatz;
- Figuren 26a) + b) -: Skizze der Anordnung von mindestens sechs Spritzgussdüsen der düsenseitigen Werkzeughälfte unter Verwendung von jeweils drei Spritzgussdüsen pro Formeinsatz.

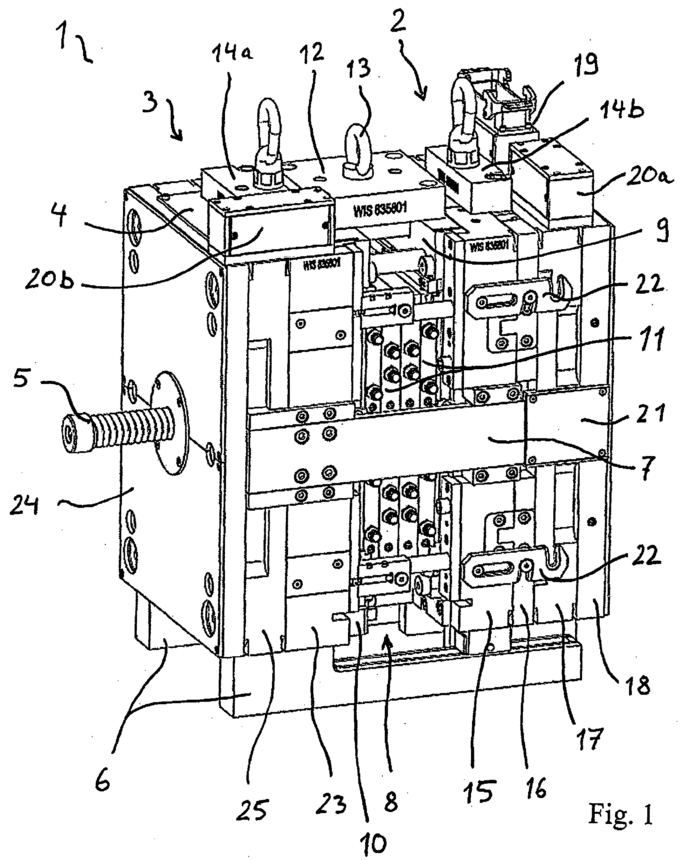

Figur 1 lässt eine perspektivische Ansicht eines Spritzgusswerkzeuges 1 erkennen, das eine erste, düsenseitige Werkzeughälfte 2 zum Anbau an eine nicht dargestellte düsenseitige, feste Aufspannplatte der Schließeinheit einer Spritzgussmaschine sowie eine zweite, auswerferseitige Werkzeughälfte 3 zum Anbau an eine nicht dargestellte auswerferseitige, bewegliche Aufspannplatte der Schließeinheit der Spritzgussmaschine hat. Von der zweiten, auswerferseitigen Werkzeughälfte 3 erstreckt sich eine mit einer Auswerfereinheit 4 (Auswerferpaket) verbundene Rückholfeder 5 von dem Spritzgusswerkzeug 1 weg nach außen, die durch Ausübung einer Federkraft auf das Auswerferpaket dieses in eine Ausgangsstellung drückt.

An der Unterseite der zweiten, auswerferseitigen Werkzeughälfte 3 sind Führungsprofile 6 z. B. in Form von Rollenführungselementen befestigt, die sich von der zweiten, auswerferseitigen Werkzeughälfte 3 in Richtung der ersten, düsenseitigen Werkzeughälfte 2 erstrecken. Die erste, düsenseitige Werkzeughälfte 2 liegt auf den Führungsprofilen 6 z.B. mittels Gleitlagerung linear beweglich auf und wird von den Führungsprofilen 7 abgestützt.

Weiterhin erstrecken sich beidseits von der zweiten, auswerferseitigen Werkzeughälfte 3 Führungsprofile 7 in Richtung der ersten, düsenseitigen Werkzeughälfte 2. Die Führungsprofile 7 sind im Querschnitt schmale, rechteckige Metallprofile, die an der zweiten, auswerferseitigen Werkzeughälfte 3 seitlich befestigt sind. Die erste, düsenseitige Werkzeughälfte 2 liegt an den Führungsprofilen 7 an und wird linear beweglich an den Führungsprofilen 7 geführt. Die Führungsprofile 6 und 7 dienen im Wesentlichen bei der Montage des Spritzgusswerkzeuges 1 und insbesondere beim Einbau in die Spritzgussmaschine als Ausrichthilfe, um beide Werkzeughälfte 2, 3 exakt parallel zueinander auszurichten.

Erkennbar ist dabei, dass die Werkzeughälften 2, 3 senkrecht zu den Führungsprofilen 6, 7 ausgerichtet sind, d. h. lotrecht zu den Führungsprofilen 6, 7 stehen.

Zur Herstellung individueller Spritzguss-Formteile ist ein individualisiertes Einschubmodul 8 vorgesehen, das in den Zwischenraum zwischen erster, düsenseitiger Werkzeughälfte 2 und zweiter, auswerferseitige Werkzeughälfte 3 eingebracht wird. Das Einschubmodul 8 hat einen düsenseitigen Einschubrahmen 9 sowie einen auswerferseitigen Einschubrahmen 10 sowie Formeinsätze 11, die in die Einschubrahmen 9, 10 eingebaut sind. Für den Umrüstvorgang sind die Einschubrahmen 9, 10 mit Hilfe einer Verbindungsbrücke 12 an der Oberseite miteinander verschraubt. Die Verbindungsbrücke 12 hat eine Öse 13, um das Einschubmodul 8 zur Umrüstung nach oben aus dem Spritzgusswerkzeug 1 herauszuheben. Entsprechende Handhabungselemente 14a, 14b mit zugeordneten Ösen sind an der ersten und zweiten Werkzeughälfte 2, 3 an deren jeweiligen Oberseite vorgesehen, so dass auch die erste und zweite Werkzeughälfte 2, 3 mittels eines Krans nach dem Lösen von der Schließeinheit der Spritzgussmaschine nach oben aus der Spritzgussmaschine herausgehoben werden können.

Die erste, düsenseitige Werkzeughälfte 2 ist mehrteilig aufgebaut und hat eine düsenseitige Formplatte 15 angrenzend an das Einschubmodul 8. Der düsenseitige Einschubrahmen 9 des Einschubmoduls 8 ist an die düsenseitige Formplatte 15 so angepasst, dass dieser düsenseitige Einschubrahmen 9 mit der düsenseitige Formplatte 15 verschraubt werden kann. Weiterhin ist angrenzend an die düsenseitige Formplatte 15 eine Druckplatte 16 angeordnet, an die sich eine Zwischenplatte 17 anschließt. Die Zwischenplatte 17 hat standardisierte Temperierkreisläufe zum Temperieren des Spritzgusswerkzeuges 1 und trägt eine standardisierten Heißkanalverteilerblock mit mindestens einer Spritzgussdüse (nicht erkennbar), die sich in Richtung der zweiten, auswerferseitigen Werkzeughälfte 3 erstreckt. Der Heißkanalverteilerblock hat weiterhin eine Anschlussöffnung für die Maschinendüse einer Spritzgussmaschine bzw. eine Einlassöffnung zum Einlass von aus der Maschinendüse austretendem, extrudiertem Spritzgussmaterial, so dass eine kommunizierende Verbindung des Spritzgussmaterialausgangs der Maschinendüse zu der mindestens einen vorstehenden Spritzgussdüse durch den Heißkanalverteilerblock bereitgestellt wird. Angrenzend an die Zwischenplatte 17 ist eine Aufspannplatte 18 zur Montage des Spritzgusswerkzeugs 1 an eine korrespondierende Aufspannplatte der Spritzgussmaschine angeordnet.

Auf der Oberseite der ersten, düsenseitigen Werkzeughälfte 2 kann ein Anschluss 19 für die zum Temperieren erforderlich Versorgung mit elektrischer Energie oder temperiertem Fluid vorgesehen sein. Zudem kann auf der Oberseite der ersten, düsenseitigen Werkzeughälfte 2 sowie der zweiten, auswerferseitigen Werkzeughälfte 3 jeweils einen Sensoranschlussblock 20a, 20b zum elektrischen Anschluss von an oder in dem Spritzgusswerkzeug 1 angeordneten Sensoren vorhanden sein. Diese Sensoranschlussblöcke 20a, 20b können optional Leuchtmittel, wie Leuchtdioden oder Displays zur Anzeige des Zustands des Spritzgusswerkzeuges 1 ggf. mit zusätzlicher Elektronik zur Zustandsüberwachung haben.

Derartige Sensoren können beispielsweise Messeinheiten 21 sein, die an mindestens einer Seite der ersten, düsenseitigen Werkzeughälfte 2 angeordnet sind und mit einem zugeordneten seitlichen Führungsprofil 7 zusammenwirken. Das freie Ende des seitlichen Führungsprofils 7 stößt im geschlossenen Zustand des Spritzgusswerkzeugs 1 auf die Messeinheit 21 auf, wobei während des Spritzgussprozesses der Abstand zwischen Führungsprofil 6 und die in diesem Fall als Längen-Messeinheit 21 ausgeführte Messeinheit überwacht und bei einer Abstandsänderung eine unzureichende Schließkraft erkannt wird.

Weiterhin können mit den Sensoren die Stellung und / oder Positionen der bewegbaren Baugruppen erfasst werden, z. B. ob das Auswerferpaket die Endpositionen erreicht hat, so dass diese Informationen von der Maschinensteuerung verarbeitet werden können.

Weiterhin ist erkennbar, dass die erste, düsenseitige Werkzeughälfte 2 Verriegelungshebel 22 hat, die schwenkbar an der Seitenwand der düsenseitigen Formplatte 15 angeordnet sind. Mit Hilfe der Verriegelungshebel 22 kann die düsenseitige Formplatte 15 im dargestellten Betriebszustand fest mit den weiteren Platten, d. h. der Druckplatte 16, der Zwischenplatte 17 und der Aufspannplatte 18 verbunden werden, indem die Verriegelungshebel 22 in Richtung der Zwischenplatte 17 verschwenkt und in von der Zwischenplatte 17 vorstehende Rastzapfen eingeklinkt werden. Dieser Rastzustand kann beispielsweise mittels Sensoren überwacht werden.

Für den Umrüstvorgang können die Verriegelungshebel 22 von der Zwischenplatte 17 gelöst und mit vorstehenden Rastzapfen der zweiten, auswerferseitigen Werkzeughälfte 3 verbunden werden, so dass die zweite, auswerferseitige Werkzeughälfte 3 zusammen mit der düsenseitigen Formplatte 15 unter Belassung eines Zwischenraums für das Einschubmodul 8 eine Einheit bildet, während die restlichen Platten 16, 17, 18 der ersten, düsenseitigen Werkzeughälfte 2 mit dem darin befindlichen Heißkanalverteilerblock, der an die Spritzgussmaschine angeschlossen bleibt, von dieser Einheit weggefahren werden.

Erkennbar ist weiterhin, dass die zweite, auswerferseitige Werkzeughälfte 3 ebenfalls mehrteilig ausgeführt ist und eine Auswerfereinheit 4 hat, die gegenüberliegend zum Einschubmodul 8 an eine auswerferseitige Formplatte 23 befestigt ist, die zum Tragen des auswerferseitigen Einschubrahmens 10 des Einschubmoduls 8 und zum Durchleiten von Auswerferelementen der Auswerfereinheit 4 ausgebildet ist. Die auswerferseitige Werkzeughälfte 3 wird mit einer Aufspannplatte 24 mit einer korrespondierenden Aufspannplatte der Spritzgussmaschine verbunden. Die Auswerfereinheit 4 ist zwischen der auswerferseitigen Aufspannplatte 24 und der auswerferseitigen Formplatte 23 angeordnet, wobei seitlich zwischen auswerferseitiger Aufspannplatte 24 und der auswerferseitiger Formplatte 23 beidseits Distanzleisten 25 vorgesehen sind.

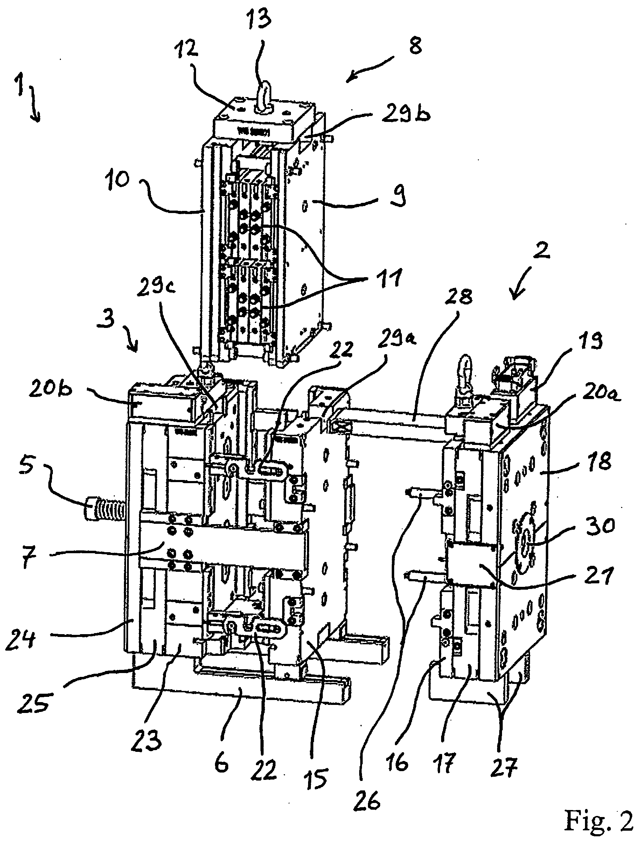

Figur 2 lässt eine perspektivische Darstellung des Spritzgusswerkzeuges 1 aus Figur 1 im Umrüstvorgang erkennen. Deutlich wird, dass die Verriegelungshebel 22 der düsenseitigen Formplatte 15 nunmehr mit der zweiten, auswerferseitigen Werkzeughälfte 3 verbunden sind. Dabei ruht die düsenseitige Formplatte 15 der ersten, düsenseitigen Werkzeughälfte 2 auf den unteren Führungsprofilen 6 der zweiten, auswerferseitigen Werkzeughälfte 3 und wird durch die seitlichen Führungsprofile 7 seitlich gehalten.

Die restlichen Platten 16, 17 und 18 der ersten, düsenseitigen Werkzeughälfte 2 sind von der zweiten, auswerferseitigen Werkzeughälfte 3 soweit voneinander getrennt, dass die aus der Druckplatte 16 und der Zwischenplatte 17 herausragenden Spritzgussdüsen 26 des Heißkanalverteilerblocks (nicht sichtbar) aus der düsenseitigen Formplatte 15 und insbesondere aus dem Einschubmodul 8 herausgezogen sind. Damit kann das Einschubmodul 8 wie dargestellt oben aus dem Zwischenraum zwischen düsenseitiger Formplatte 15 und zweiter, auswerferseitiger Werkzeughälfte 3 herausgezogen werden.

Die düsenseitige Druckplatte 16 mit daran angebauter Zwischenplatte 17 und dem darin aufgenommenen Heißkanalverteilerblock sowie die düsenseitige Aufspannplatte 18 ruhen auf damit verschraubten Standfüßen 27.

Erkennbar ist weiterhin, dass im oberen Bereich der ersten, düsenseitigen Werkzeughälfte 2 ein weiteres oberes Führungsprofil 28 in Richtung zweiter, auswerferseitiger Werkzeughälfte 3 herausragt. In der düsenseitigen Formplatte 15 und an der Oberkante des Einschubmoduls 8 sind daran angepasste Freiarbeitungen in Form von Nuten 29a, 29b vorhanden. An der auswerferseitigen Werkzeughälfte 3 ist eine Nut 29c vorhanden, in die das obere Führungsprofil 28 eintaucht, um die erste, düsenseitige Werkzeughälfte 2 präzise an der zweiten, auswerferseitigen Werkzeughälfte 3 zu zentrieren.

Erkennbar ist weiterhin eine Einlassöffnung 30 des standardisierten Heißverteilerbalkens zum Anschluss der Maschinendüse einer Spritzgussmaschine, die zum Einleiten von extrudiertem Spritzgussmaterial in den Heißverteilerbalken dient.

Deutlich wird, dass die erste und zweite Werkzeughälfte 2, 3 standardisiert sind und ein zur Herstellung bestimmter Formteile individualisiertes Einschubmodul 8 in diese beiden standardisierten Werkzeughälfte 2, 3 von oben eingebracht werden kann.

Denkbar ist allerdings, dass eine begrenzte Anzahl unterschiedlicher standardisierter Werkzeughälften 2, 3 mit unterschiedlicher Anordnung und ggf. unterschiedlicher Anzahl von Spritzgussdüsen 26 sowie ggf. mit einer unterschiedlichen Ausführungsform der Auswerfereinheit 4 vorgesehen sein können. Auf diese Weise können standardisierte Werkzeughälften 2, 3 für verschiedene Größenordnungen von Formteilen und Fachzahlen vorgesehen werden.

Für die Herstellung neuer Formteile sind nur noch ein hieran angepasstes Einschubmodul 8 und ggf. nur ein hieran angepasster Formeinsatz je nach Bedarf erforderlich. Dies ermöglicht eine skalierte Herstellung der Einschubmodule 8 ausgehend von einem standardisierten Einschubmodul 8 durch individualisierte Anpassung der Formeinsätze 11. Diese Formeinsätze 11 können ebenfalls zunächst einmal standardisiert ohne Kavität vorgefertigt sein und zur individualisierten Anpassung an ein bestimmtes Formwerkzeug nur noch nachbearbeitet werden. Dies verkürzt die Herstellungszeiten für Spritzgusswerkzeuge 1 erheblich und führt zudem zu einer signifikanten Kostensenkung.

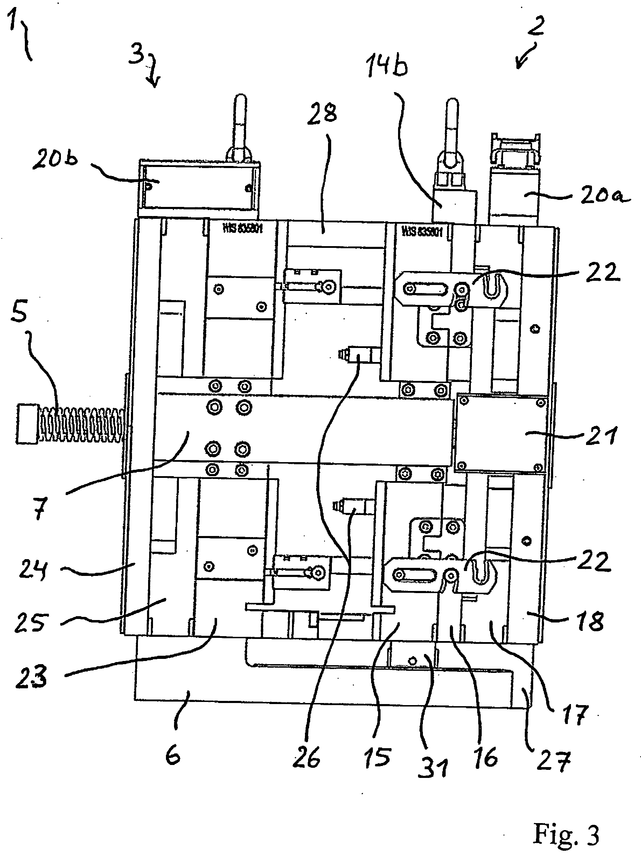

Figur 3 lässt eine Seitenansicht des Spritzgusswerkzeuges 1 aus den Figuren 1 und 2 im Betriebszustand ohne Einschubmodul 8 erkennen. Dabei sind die erste und zweite Werkzeughälfte 2, 3 aufeinander zugefahren und die düsenseitige Formplatte 15 ist mit Hilfe der Verriegelungshebel 22 mit der Druckplatte 17 verrastet.

Deutlich wird, dass die düsenseitige Formplatte 15 mit Hilfe eines Gleitfußes 31 auf den unteren Führungsprofilen 6 linear beweglich gelagert ist. Die weiteren Platten 16, 17 und 18 der ersten, düsenseitigen Werkzeughälfte 2 ruhen auf gemeinsamen Standfüßen 27.

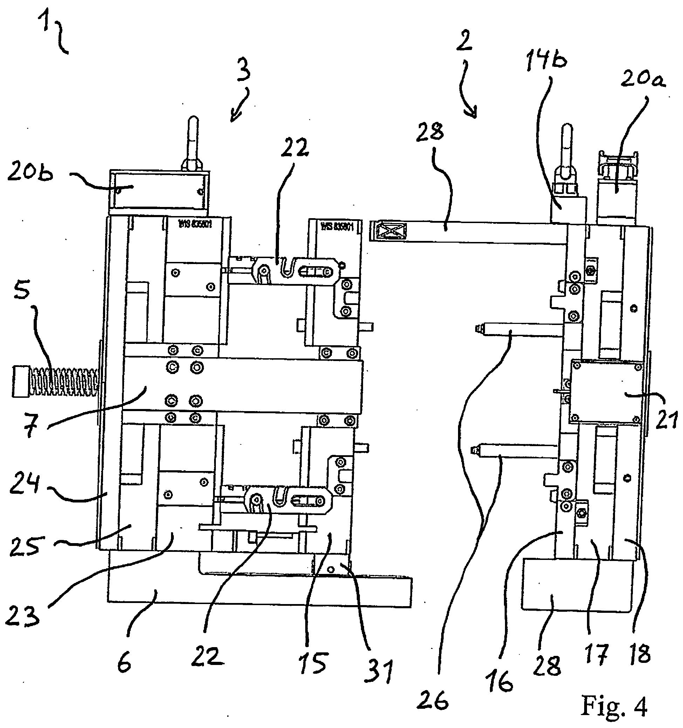

Figur 4 lässt das Spritzgusswerkzeug 1 aus Figur 2 ohne Einschubmodul 8 im Umrüstvorgang erkennen. Deutlich wird, dass die düsenseitige Formplatte 15 im Umrüstvorgang durch Verrasten der Verriegelungshebel 22 der düsenseitigen Formplatte 15 mit der zweiten, auswerferseitigen Werkzeughälfte 3 mit dieser verbunden ist. Durch Umschwenken der Verriegelungshebel 22 wird die düsenseitige Formplatte 15 der ersten, düsenseitigen Werkzeughälfte 2 hierzu von den weiteren Platten 16, 17, 18 der ersten, düsenseitigen Werkzeughälfte 2 gelöst. Die zweite, auswerferseitige Werkzeughälfte 3 kann daher von den weiteren mit der feststehenden Aufspannplatte der Spritzgussmaschine verbundenen, ebenfalls feststehenden Platten 16, 17 und 18 der ersten, düsenseitigen Werkzeughälfte 2 weg bewegt werden, wodurch das vorher dazwischen liegende Einschubmodul 8 freigegeben ist und nach oben herausgehoben werden kann. Entsprechend ist ein Freiraum geschaffen, in den ein neues Einschubmodul 8 von Oben eingeführt werden kann.

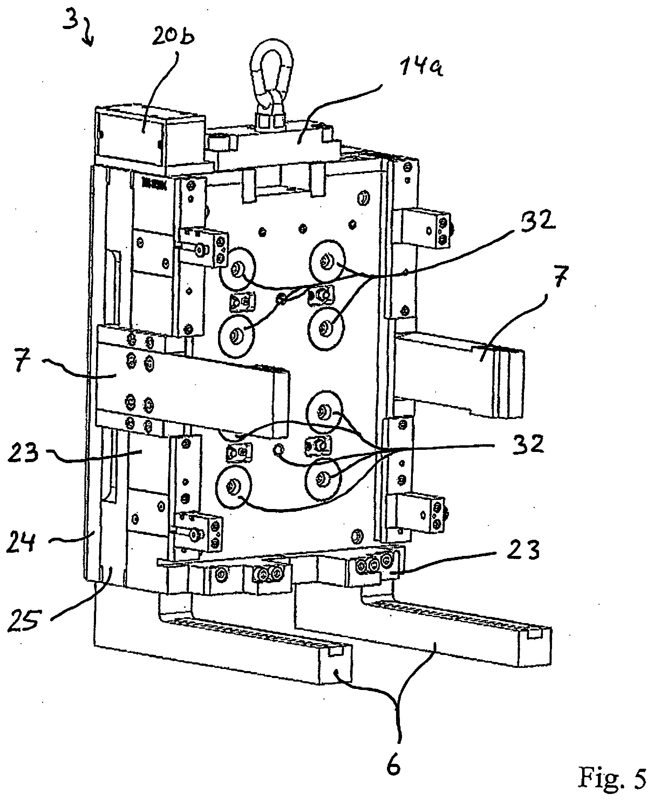

Figur 5 lässt eine perspektivische Ansicht der zweiten, auswerferseitigen Werkzeughälfte 3 erkennen. Deutlich wird, dass eine Mehrzahl von Auswerfer-elementen 32 in Form von Auswerferrollen in der auswerferseitigen Formplatte 23 linear beweglich gelagert sind und mit ihrem freien Ende in Richtung der ersten, düsenseitigen Werkzeughälfte 2 herausragen. Im unteren Bereich der auswerferseitigen Formplatte 23 sind Auflage- und Führungselemente 33 vorgesehen, die nach vorne herausragen und zur Auflage eines Einschubrahmens des Einschubmoduls 8 dienen.

Erkennbar ist weiterhin, dass seitlich von der zweiten, auswerferseitigen Werkzeughälfte 3 im Querschnitt rechteckförmige Führungsprofile 7 nach vorne in Richtung erster, düsenseitiger Werkzeughälfte 2 abragen.

Ebenso sind die unteren Führungsprofile 6 mit den Rollenführungen zur Auflagerung der düsenseitigen Formplatte 15 erkennbar.

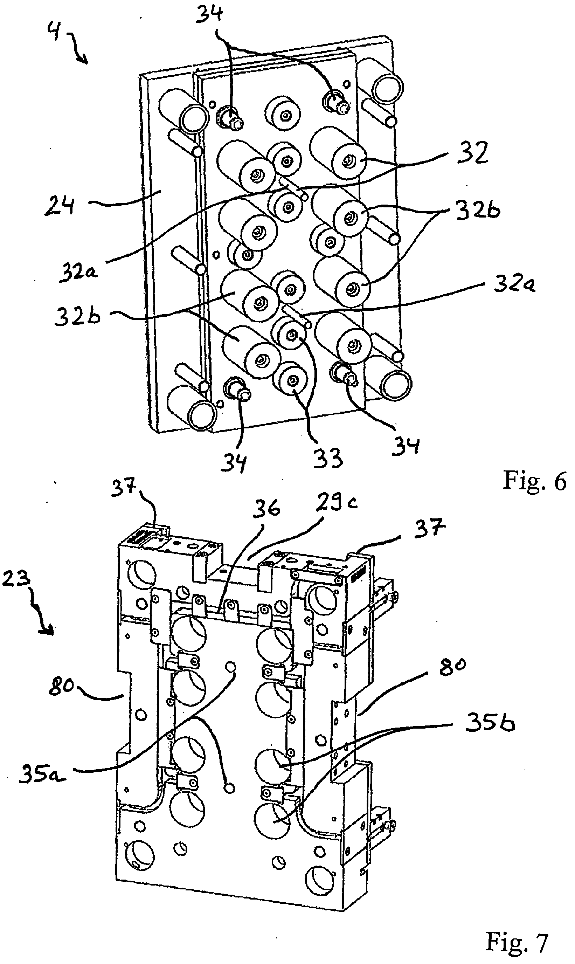

Figur 6 lässt eine perspektivische Frontansicht einer standardisierten Auswerfereinheit 4 der zweiten, auswerferseitigen Werkzeughälfte 3 erkennen. Erkennbar ist, dass von der Auswerfereinheit 4 nach vorne linear bewegliche stiftartige Auswerferrollen 32a sowie zylinderförmige Auswerferrollen 32b hervorragen. Weiterhin sind nach innen versetzt mit geringerer Länge Stützrollen 33 vorgesehen, die in zugeordnete Freimachungen der auswerferseitigen Formplatte 23 eintauchen und mit einer auswerferseitigen Aufspannplatte 24 verbunden sind. Die Stützrollen 33 dienen zum Abstützen der auswerferseitigen Werkzeughälfte 3 und des darin befindlichen Einschubrahmens 10.

Die zentrierte Lagerung der Auswerfereinheit 4 an der auswerferseitigen Aufspannplatte 24 erfolgt mittels Kugelführungen 34.

Mit elektromechanischen oder hydraulisch betätigten, längenveränderbaren Aktoren wird eine Relativbewegung der Auswerfereinheit 4 zur auswerferseitigen Formplatte 23 erreicht, so dass die Auswerferelemente 32, d.h. die Auswerferrollen 32a, 32b im Betätigungszustand aus der auswerferseitigen Formplatte 23 herausragen.

Figur 7 lässt eine Darstellung der auswerferseitigen Formplatte 23 in perspektivischer Ansicht erkennen. Deutlich ist, dass Bohrungen 35a, 35b für die Auswerferrollen 32a, 32b vorgesehen sind. Weiterhin sind an den rechteckigen Seiten Freimachungen 80 zur Aufnahme der Führungsprofile 7 vorhanden. Zudem sind Kanäle 36 zur Aufnahme elektrischer Verdrahtung und zum Einbau von Sensoren in die auswerferseitige Formplatte 23 eingebracht. Erkennbar sind auch Gleitführungen 37 zum Einschieben des auswerferseitigen Einschubrahmens 10 eines Einschubmoduls 8 von oben und zum Halten desselben an der auswerferseitigen Formplatte 23.

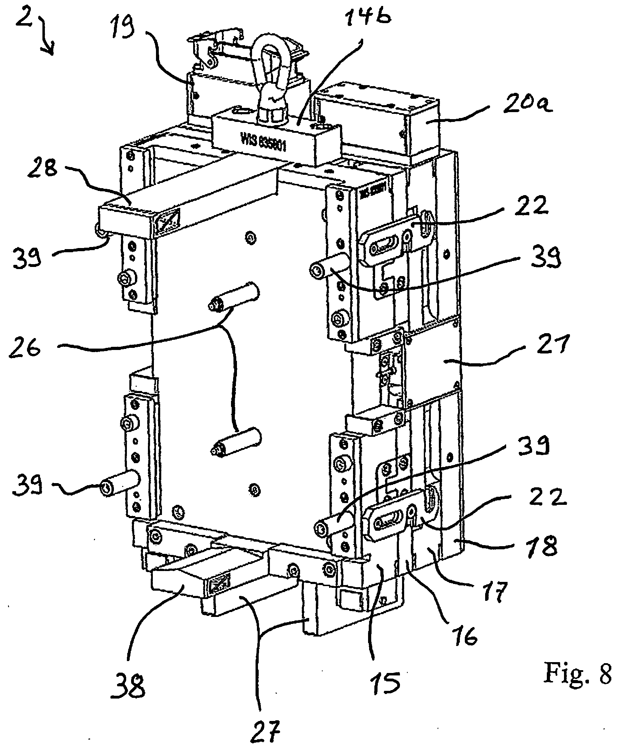

Figur 8 lässt eine perspektivische Frontansicht der ersten, düsenseitigen Werkzeughälfte 2 erkennen. Deutlich wird, dass nicht nur im oberen Bereich ein oberes Führungsprofil 28 herausragt, sondern auch im unteren Bereich parallel hierzu ein unteres Führungsprofil 38 vorgesehen ist, das sich parallel zum oberen Führungsprofil 28 nach vorne erstreckt.

Erkennbar sind weiterhin die Spritzgussdüsen 26, die von der aus der düsenseitigen Formplatte 15 herausragen. Deutlich wird weiterhin, dass seitlich federbelastete Distanzelemente 39 von der düsenseitigen Formplatte 15 in Richtung zweiter, auswerferseitiger Werkzeughälfte 3 herausragen. Mit Hilfe dieser federbelasteten Distanzelemente 39 lässt sich ein definierter Zwischenraum für das Einschubmodul 8 beim Verfahren der düsenseitigen Formplatte 15 in Richtung zweiter, auswerferseitiger Werkzeughälfte 3 einstellen.

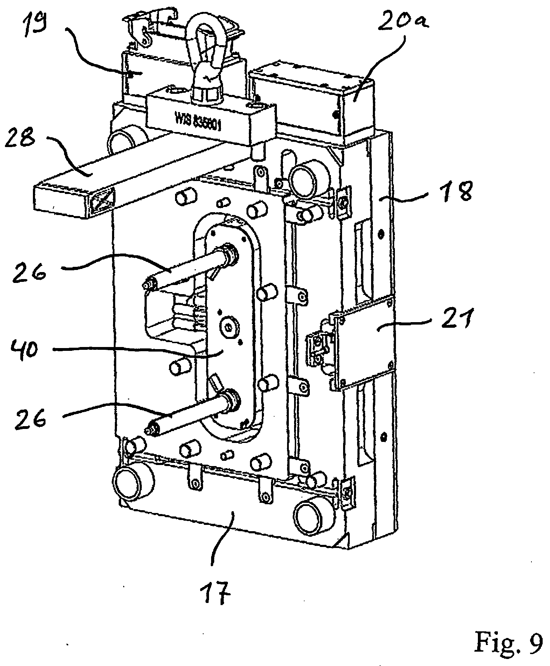

Figur 9 lässt eine perspektivische Frontansicht der Zwischenplatte 17 mit dem darin angeordneten standardisierten Heißkanalverteilerbalken 40 sowie die dahinter liegende Aufspannplatte 18 der ersten, düsenseitigen Werkzeughälfte 2 erkennen. Der Heißkanalverteilerbalken 40 hat im Bereich der Aufspannplatte 18 eine zentrale Einlassöffnung (nicht sichtbar, Einlassöffnung 30 in Figur 1) zum Anschluss der Maschinendüse einer Spritzgussmaschine, an die sich ein Verteilerkanal zu den Spritzgussdüsen 26 anschließt.

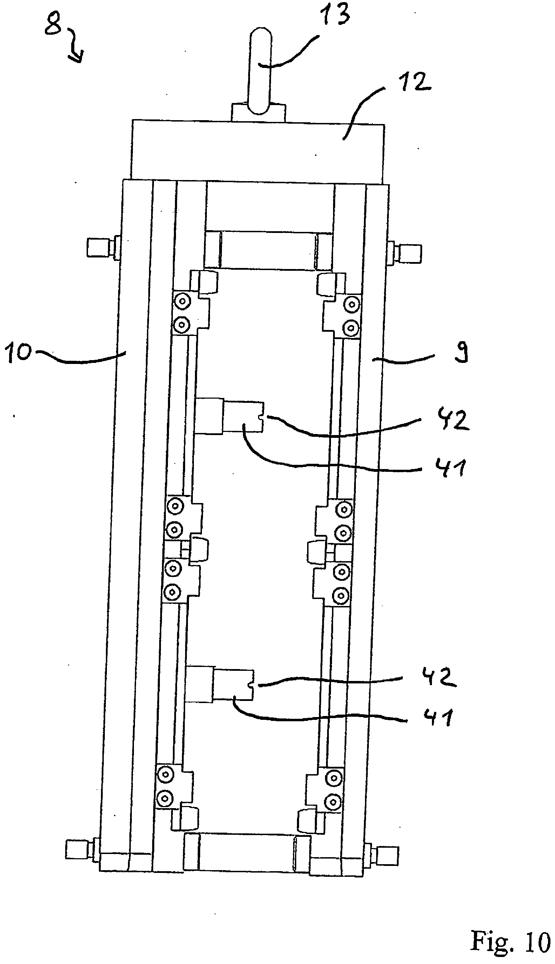

Figur 10 lässt einen düsenseitigen und einen auswerferseitigen Einschubrahmen 9, 10 ohne zwischenliegende Formeinsätze 11 erkennen. Die beiden Einschubrahmen 9, 10 sind zu einem einheitlichen Einschubmodul 8 mit Hilfe der oberen Verbindungsbrücke 12 verbunden. Hierzu wird die obere Verbindungsbrücke 11 von oben mit den Einschubrahmen 9, 10 verschraubt.

Deutlich wird weiterhin, dass von dem auswerferseitigen Einschubrahmen 10 Spritzguss-Verteilerköpfe 41 in Richtung des düsenseitigen Einschubrahmens 9 erstrecken. In diesen Spritzguss-Verteilerköpfen 41 sind Kanäle 42 an deren freien Kopfenden eingebracht. Beim Schließen des Spritzgusswerkzeuges 1 wird das freie Ende einer Spritzgussdüse 26 auf einen zugeordneten Spritzguss-Verteilerkopf 41 zu bewegt, so dass sich die Spitze der Spritzgussdüse 26 unmittelbar gegenüberliegend zu dem freien Kopfende eines zugeordneten Spritzguss-Verteilerkopfes 41 befindet. Das aus der Spritzgussdüse 26 austretende Spritzgussmaterial gelangt somit in die Kanäle 42 und wird von dort in angrenzende Formeinsätze 11 verteilt. Die Spritzguss-Verteilerköpfe 41 sind vorzugsweise drehbar, z.B. in konstruktiv vorgegebenen Schritten von jeweils 15°, so dass die Ausrichtung der Kanäle 42 auf die Anzahl vorhandener Formeinsätze 11 und die Position von Spritzgussmaterialeinlässen in den Formeinsätzen 11 eingestellt werden kann.

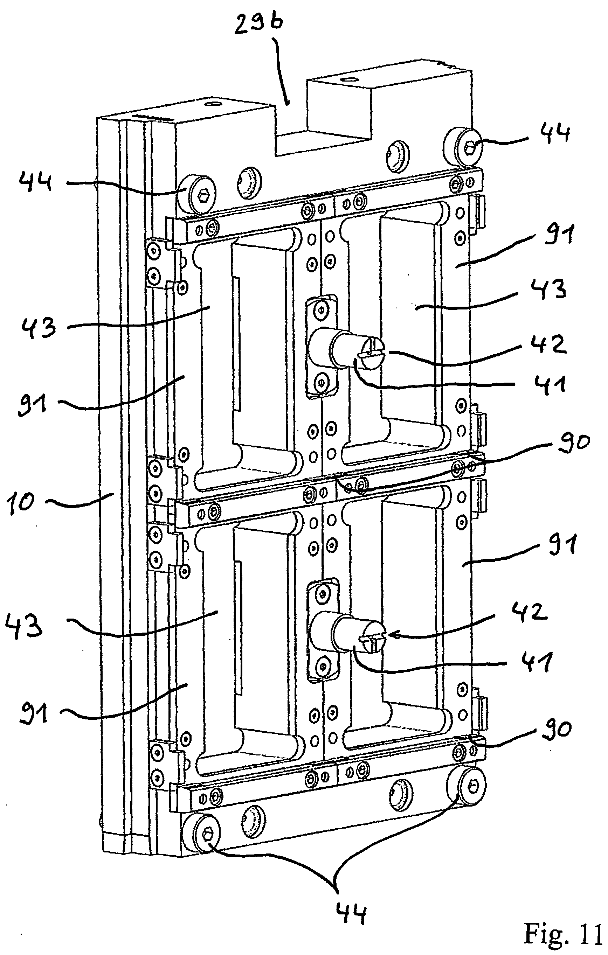

Figur 11 lässt eine perspektivische Ansicht des auswerferseitigen Einschubrahmens 10 erkennen. Deutlich wird dabei, dass der Einschubrahmen 10 mehrere Aufnahmeöffnungen 43 zur Aufnahme eines Teils eines Formeinsatzes 11 hat. Insbesondere dienen die Aufnahmeöffnungen 43 zur Aufnahme einer Auswerfereinheit eines individuellen Formeinsatzes 11. Die auswerferseitige Formeinsatzhälfte wird mit dem auswerferseitigen Einschubrahmen 10 fest beispielsweise durch Verschrauben verbunden.

Zur Reduzierung des Wärmetransfers von den Einschubrahmen 9, 10 zum jeweiligen Formeinsatz 10 ist es vorteilhaft, wenn Abstandsplatten 90 und/oder wärmeisolierende Zwischenlagen 91 an den Einschubrahmen 10 vorhanden sind, die zwischen Formeinsätzen 11 und Einschubrahmen 9, 10 liegen.

Erkennbar ist weiterhin, dass der Einschubrahmen 10 durch Bohrungen geführte Passschrauben 44 hat, mit denen der auswerferseitige Einschubrahmen 10 mit dem der zweiten, auswerferseitigen Werkzeughälfte 3 fest verbunden werden kann, nachdem das Einschubmodul 8 im Zwischenraum zwischen erster und zweiter Werkzeughälfte 2, 3 eingeführt ist.

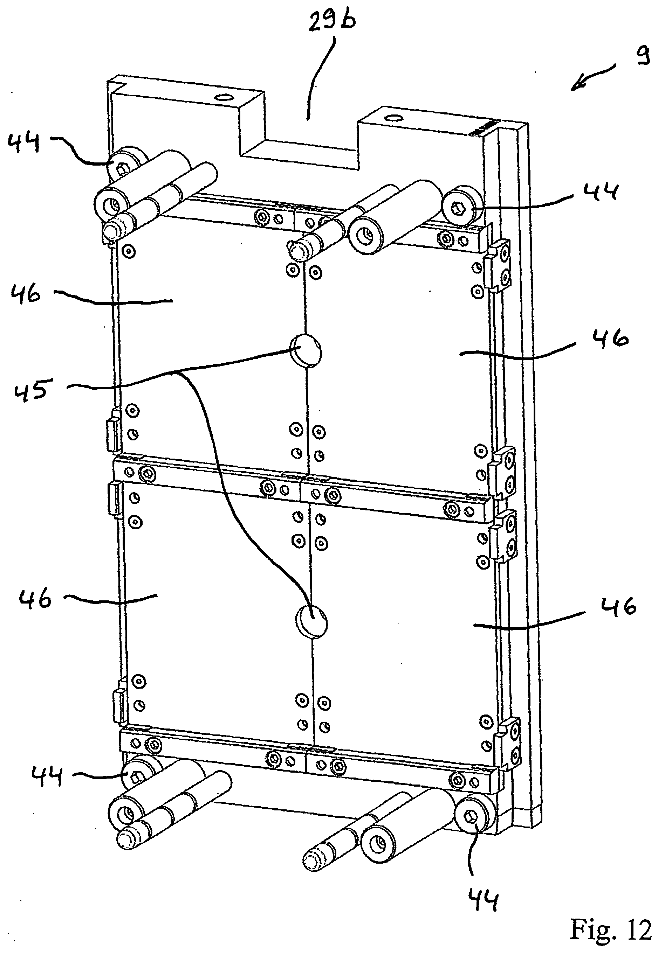

Figur 12 lässt eine perspektivische Ansicht eines düsenseitigen Einschubrahmens 8 erkennen. Deutlich wird, dass Öffnungen 45 zur Durchführung der mindestens einen Spritzgussdüse 26 der ersten, düsenseitigen Werkzeughälfte 2 vorhanden sind. Deutlich wird weiterhin, dass an der Oberseite des Einschubrahmens 9 wärmeisolierende Platten 46 angebracht sind, mit denen der Wärmetransfer von der Werkzeughälfte 2 auf die Formeinsätze 11 beschränkt wird. Auch hier sind durch Bohrungen geführte Passschrauben 44 vorgesehen, um den düsenseitigen Einschubrahmen 9 mit der ersten, düsenseitigen Werkzeughälfte 2 zu verschrauben.

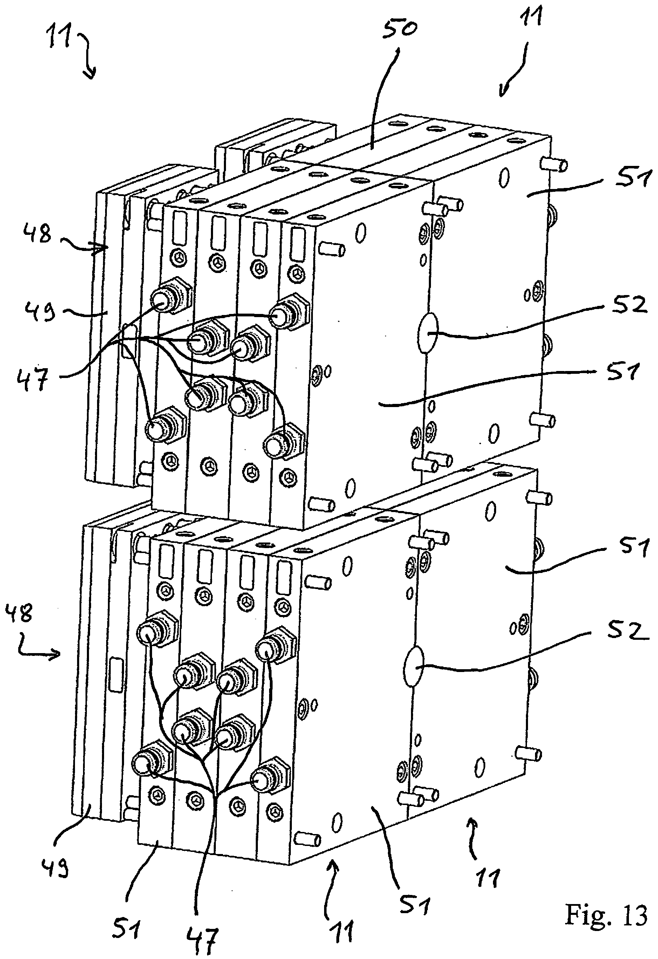

Figur 13 lässt eine perspektivische Ansicht von vier Formeinsätzen 11 erkennen. Deutlich wird, dass an einer Seitenwand der Formeinsätze 11 Anschlussstutzen 47 herausragen, die zum Anschluss von Fluidleitungen dienen. Über die Anschlussstutzen 47 kann zur Abkühlung oder Erwärmung Fluid durch Temperierkanäle der Formeinsätze 11 geleitet werden.

Deutlich wird weiterhin, dass die Formeinsätze 11 jeweils mindestens eine Auswerfereinheit 48 mit einem Auswerferpaket 49 hat, die über die Auswerfer-elemente 32 der zweiten, auswerferseitigen Werkzeughälfte 3 betätigt werden.

Erkennbar ist weiterhin, dass die Formeinsätze 11 eine erste, auswerferseitige Formeinsatzhälfte 50 sowie eine zweite, düsenseitige Formeinsatzhälfte 51 haben, die im dargestellten geschlossenen Zustand aufeinander liegen und im geöffneten Zustand voneinander weg bewegbar sind.

Erkennbar ist weiterhin, dass die düsenseitigen Formeinsatzhälften 51 Spritzgussdüsen-Einführöffnungen 52 zum Einführen einer Spritzgussdüse 26 der ersten, düsenseitigen Werkzeughälfte 2 haben.

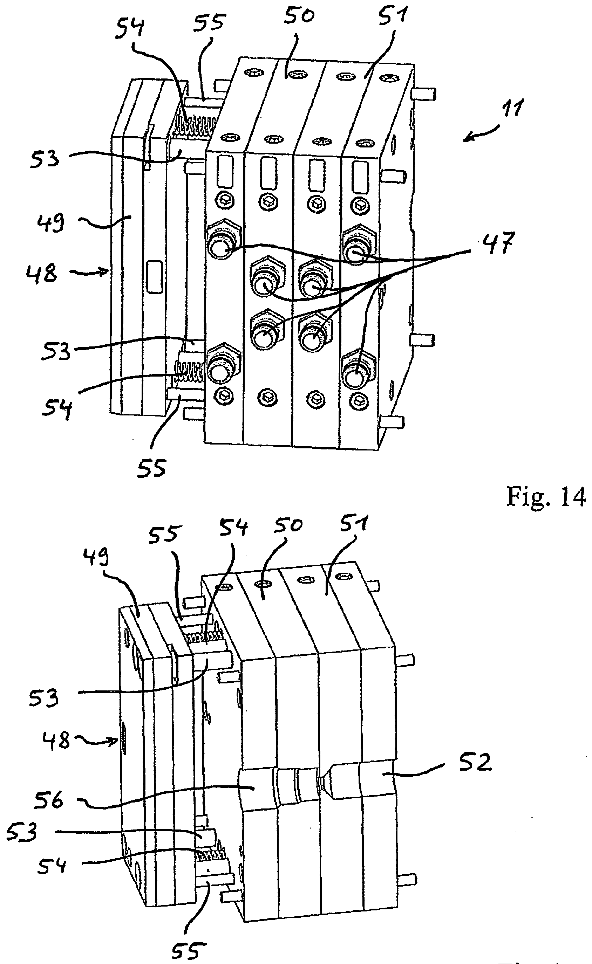

Figur 14 lässt einen Formeinsatz 11 aus Figur 13 von der Versorgungsanschlussseite erkennen. Deutlich werden dabei die Anschlussstutzen 47 an der Seitenwand der Formeinsatzhälften 50, 51.

Erkennbar ist weiterhin, dass die Auswerfereinheit 48 ein Auswerferpaket 49 hat, die mittels Führungsstiften 53 beweglich an der auswerferseitigen Formeinsatzhälfte 50 geführt ist. Mit Hilfe von Rückholfedern 54 wird erreicht, dass das Auswerferpaket 49 sich von der auswerferseitigen Formeinsatzhälfte 50 weg bewegt, wenn sie nicht durch ein zugeordnetes Auswerferelement 32 der zweiten, auswerferseitigen Werkzeughälfte 3 in Richtung der auswerferseitigen Formeinsatzhälfte 50 gedrückt wird.

Weiterhin sind Rückholstifte 55 zum Schutz von nicht dargestellten individualisierten Auswerferstiften und der Kavitäten vorgesehen. Individualisierte Auswerferstifte (nicht dargestellt) werden genutzt, um ein Formteil aus dem Formeinsatz 11 herauszustoßen.

Figur 15 lässt den Formeinsatz 11 aus Figuren 13 und 14 von der Einspritzseite erkennen. Deutlich wird, dass eine im dargestellten Ausführungsbeispiel halbkreisförmige Spritzgussdüsen-Einführöffnung 52 vorgesehen ist, die sich mit einem angrenzenden Formeinsatz 11 zu einer vollständigen kreisrunden Spritzgussdüsen-Einführöffnung 52 ergänzt. Denkbar sind aber auch Ausführungsformen, bei denen ein Formeinsatz 11 eine zylinderförmige Spritzgussdüsen-Einführöffnung 52 hat, so dass die Spritzgussdüse 26 vollständig in ein einziges Formwerkzeug 11 und nicht, wie vorliegend, in zwei nebeneinander angeordneten Formwerkzeuge 11 eintaucht.

Gegenüberliegend zu der Spritzgussdüsen-Einführöffnung 52 und fluchtend hierzu ist eine Spritzguss-Verteilerkopf-Einführöffnung 56 in die auswerferseitige Formeinsatzhälfte 50 eingebracht. Auf diese Weise wird sichergestellt, dass das freie Kopfende des Spritzguss-Verteilerkopfes 41 direkt angrenzend und gegenüberliegend zu dem freien Ende einer Spritzgussdüse 26 liegt, so dass Spritzgussmaterial in Kanäle 42 am freien Kopfende der Spritzguss-Verteilerdüse 41 einströmen kann. In diesem Grenzbereich zwischen den beiden Formeinsatzhälften 50, 51 sind in Kavitäten führende Spritzgussmaterialkanäle vorgesehen, die in die Einführöffnungen 52 und/oder 56 münden.

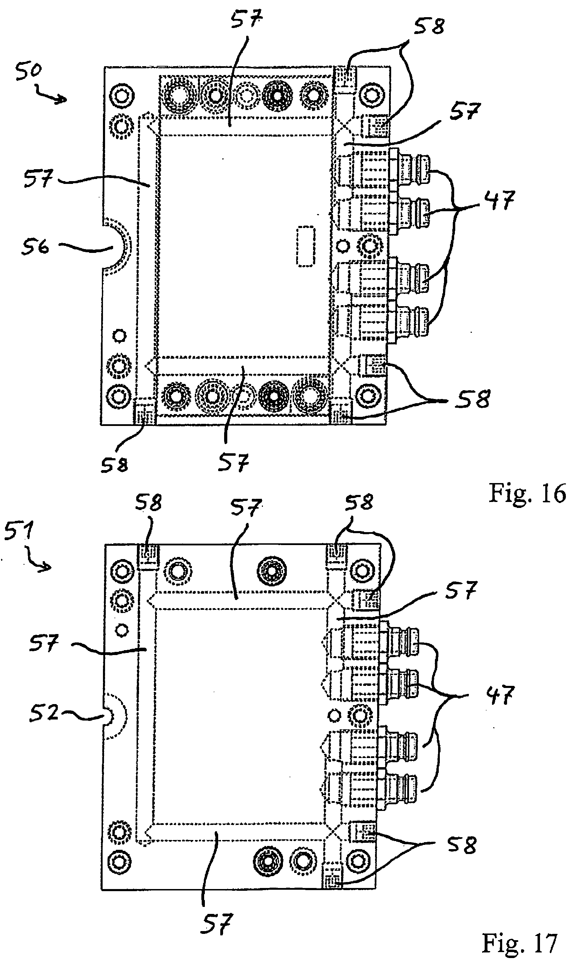

Figur 16 lässt eine Draufsicht auf die Innenseite eines Teils an der auswerferseitigen Formeinsatzhälfte 50 erkennen. Deutlich wird, dass auf der Innenseite ein Temperierkanal 57 eingebracht ist, der von der Anschlussseite mit den Anschlussstutzen 47 kommunizierend verbunden ist und die Formeinsatzhälfte 50 umläuft. Die geradlinigen, durch Bohrung entstandenen Abschnitte des Temperierkanals 57 enden in Bohrlöchern 58, die verschlossen werden.

Figur 17 lässt eine entsprechende Draufsicht auf die Innenseite eines Teils der düsenseitigen Formeinsatzhälfte 51 erkennen. Auch hier ist ein Temperierkanal 57 umlaufend eingebracht und es ist eine Mehrzahl von mit Anschlussstutzen 47 versehene Fluid-Ein-/Auslassöffnungen vorgesehen.

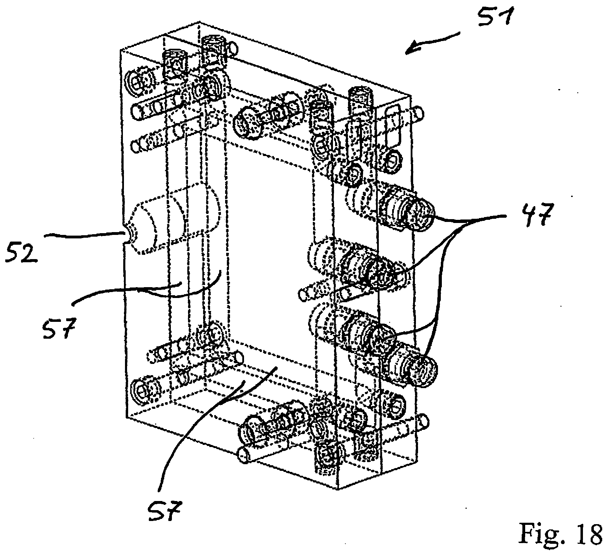

Figur 18 lässt eine perspektivische Ansicht der düsenseitigen Formeinsatzhälfte 51 erkennen. Aus der semitransparenten Ansicht wird deutlich, dass Temperierkanäle 57 in den Innenraum der beiden aufeinander geschraubten Teile der Formeinsatzhälften 51 eingebracht sind.

In die erkennbare Oberseite der Formeinsatzhälfte 51 kann nun eine individuelle Kavität zur Herstellung eines individuellen Formteils eingebracht werden. Dies kann in an sich bekannter Weise durch Fräsen, Elektroerosion oder ähnliches erfolgen. Zur Einleitung von Spritzgussmaterial in eine solche Kavität ist das Einbringen eines Spritzgusskanals von den Kanälen des Spritzguss-Verteilerkopfes erforderlich. Eine Direktanspritzung ist auch möglich.

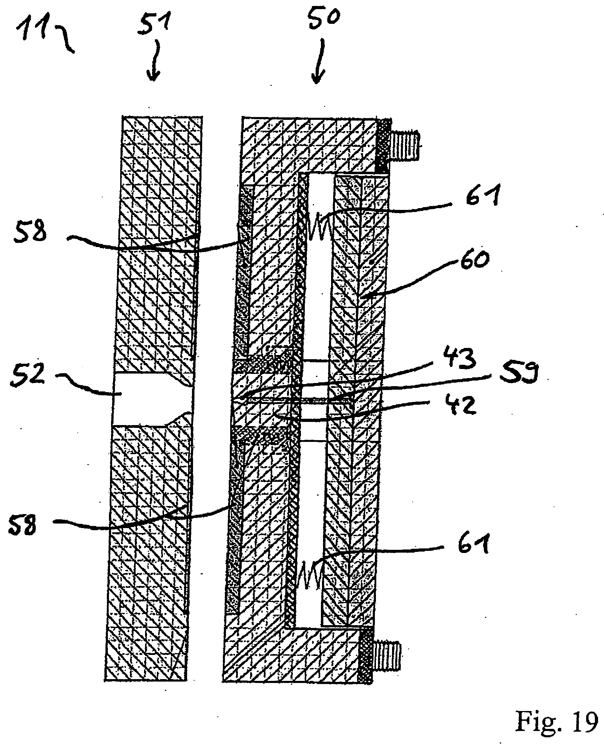

Figur 19 lässt eine Skizze eines Formwerkzeuges 11 in der Querschnittsansicht zur Herstellung eines sehr einfachen Formteils erkennen. Bei dieser Ausführungsform ist ein Spritzgussmaterial-Verteilerkopf 42 in der auswerferseitigen Formeinsatzhälfte 50 gegenüberliegend zur Spritzgussdüsen-Einführöffnung 52 vorgesehen, der zu Kavitäten 58 für ein Formteil führende Kanäle 43 hat. Der Spritzgussmaterial-Verteilerkopf 42 ist vorzugsweise drehbar gelagert, so dass die Austrittsrichtung von Spritzgussmaterial einfach geändert werden kann und Kavitäten bedarfsweise abgesperrt werden können.

Ein Auswerferstift 59 ist an einer Auswerferplatte 60 in seiner Erstreckungsrichtung linear beweglich gelagert und kann mit Hilfe der Auswerfereinheit 4 in Richtung düsenseitiger Formeinsatzhälfte 51 bewegt werden. Auf diese Weise wird der Anguss zusammen mit den daran angeordneten Formteilen nach dem Spritzgussvorgang aus dem Formeinsatz entfernt. Damit werden die Formteile aus den Kavitäten 58 herausbefördert und fallen nach unten in einen Sammelbehälter. Zum Rückstellen der Auswerferplatte 60 mit dem Auswerferstift 59 sind Rückholfedern 61 zwischen Auswerferplatte 60 und auswerferseitiger Formeinsatzhälfte 50 angeordnet.

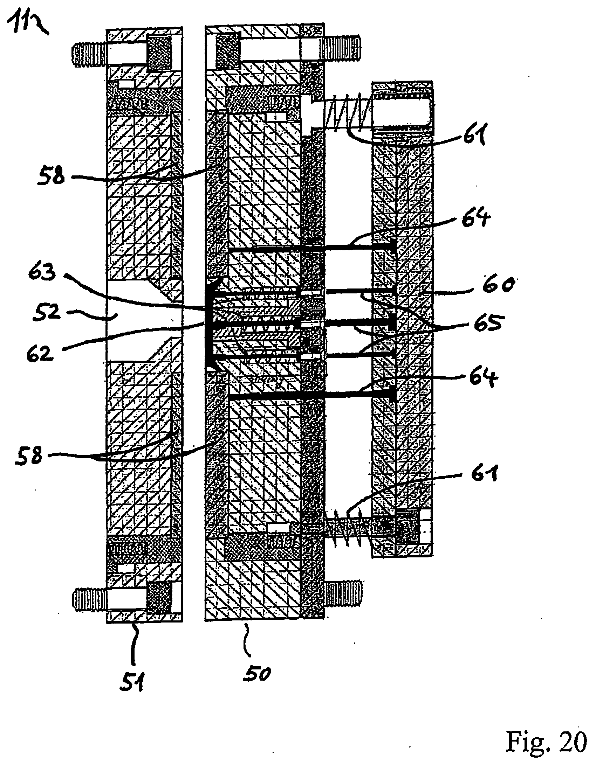

Figur 20 lässt eine etwas komplexere Ausführungsform eines Formeinsatzes 11 erkennen. Deutlich wird, dass gegenüberliegend zu der Spritzgussdüsen-Einführöffnung 52 der düsenseitigen Formeinsatzhälfte 51 ein z. B. mit Kanälen versehener Unterverteiler 62 in der auswerferseitigen Formeinsatzhälfte 50 angeordnet ist, der mit federbelasteten Auswerferstiften 63 in Richtung düsenseitiger Formeinsatzhälfte 51 herausführbar ist. Auf diese Weise kann der Anguss separat vom Formteil entfernt werden. Weiterhin sind Auswerferstifte 64 direkt mit der Auswerferplatte 60 der Auswerfereinheit verbunden, um die Formteile aus den zugehörigen Kavitäten 58 herauszudrücken. Die Betätigung der federbelasteten Auswerferstifte 63 erfolgt mittels weiteren Auswerferstiften 65, die durch eine verkürzte Länge erst auf die federbelasteten Auswerferstifte 63 auftreffen, nachdem die in die Kavitäten 58 führenden Auswerferstifte 64 die Formteile aus den Kavitäten 58 herausgedrückt haben. Damit wird sichergestellt, dass, zunächst die Formteile aus den Kavitäten 58 herausgedrückt werden, wobei sich die Formteile von dem Anguss lösen. Anschließend wird verzögert der Anguss herausgedrückt, so dass die Formteile automatisch vom Anguss separiert sind.

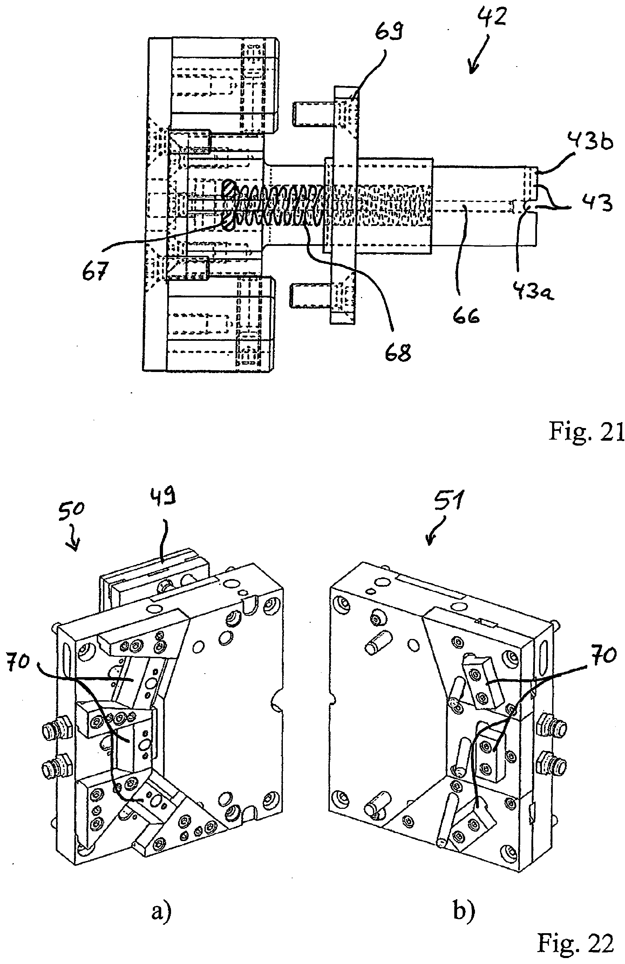

Figur 21 lässt eine Seitenansicht eines Spritzgussmaterial-Verteilerkopfes 42 erkennen. Deutlich wird, dass der Spritzgussmaterial-Verteilerkopf 42 an seinem freien Kopfende einen Kanal 43 hat. Dieser Kanal 43 hat vorzugsweise einerseits einen zentral von einer Seite zur gegenüberliegenden Seite führenden Kanalabschnitt 43a sowie einen senkrecht davon abgehenden Kanalabschnitt 43b. Auf diese Weise kann durch Verdrehen des Spritzgussmaterial-Verteilerkopfes 42 die Ausrichtung der Kanäle 43 geändert werden, so dass entweder zwei nebeneinander liegende Formeinsatzhälften mit den Kanälen 43 in eine kommunizierende Verbindung treten oder nur eine Formeinsatzhälfte von den Kanälen 43 versorgt wird. Besonders vorteilhaft ist es, wenn der Spritzgussmaterial-Verteilerkopf 38 in Winkelschritten von 15° verdrehbar ist.

Erkennbar ist weiterhin, dass in dem Spritzgussmaterial-Verteilerkopf 42 linear beweglich in Erstreckungsrichtung ein Angussauswerfer 66 in Form eines Auswerferstiftes gelagert ist. Dieser Auswerferstift hat gegenüberliegend von seinem freien Ende einen Druckbolzen 67, auf dem eine Druckfeder 68 als Rückholfeder für den Angussauswerfer 66 aufliegt.

Weiterhin ist ein Führungsstück 69 auf dem Spritzgussmaterial-Verteilerkopf 42 gelagert und mit dem auswerferseitigen Einschubrahmen 10 verschraubt. Das Führungsstück 69 dient zum Zentrieren und Führen des Spritzgussmaterial-Verteilerkopfes 42.

Figur 22a) und 22b) lassen eine perspektivische Ansicht der beiden Formeinsatzhälften 50, 51 erkennen, die in dem dargestellten Ausführungsbeispiel mit in einem standardisierten Einbauraum angeordneten Schieberelementen 70 versehen sind. Diese Schieberelemente 70 sind beweglich angeordnet, um zur Herstellung von Formteilen mit Hinterschnitten Formelemente in eine Kavität 58 hineinzuführen bzw. nach Herstellung des Formteils aus der Kavität 58 wieder herauszuführen.

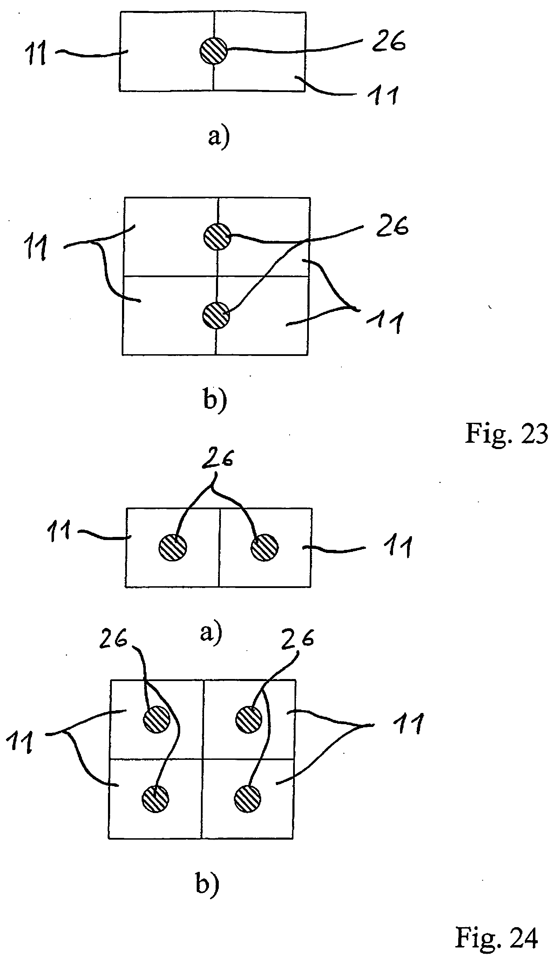

Figur 23a) lässt eine Prinzipsskizze für standardisierte Werkzeughälften mit einer Spritzgussdüse 26 erkennen, die von zwei nebeneinander angeordneten Formeinsätzen 11 gemeinsam genutzt wird.

Figur 23b) lässt eine andere Ausführungsform einer standardisierten Werkzeughälfte mit zwei übereinander liegenden Spritzgussdüsen 26 erkennen, die jeweils wie in Figur 23a) von zwei nebeneinander liegenden Formeinsätzen 11 genutzt werden.

Figur 24 a) und b) lässt eine andere Ausführungsform erkennen, bei der pro Formeinsatz 11 jeweils eine Spritzgussdüse 26 der düsenseitigen Werkzeughälfte vorgesehen ist.

Auf diese Weise können z. B. zwei nebeneinander liegende Spritzgussdüsen 26 vorgesehen sein, mit denen zwei nebeneinander liegende Formeinsätze 11 versorgt werden.

Gemäß Figur 24b) können auch vier Spritzgussdüsen 26 matrixartig verteilt angeordnet sein, um vier schachbrettartig nebeneinander liegende Formeinsätze 11 zu versorgen.

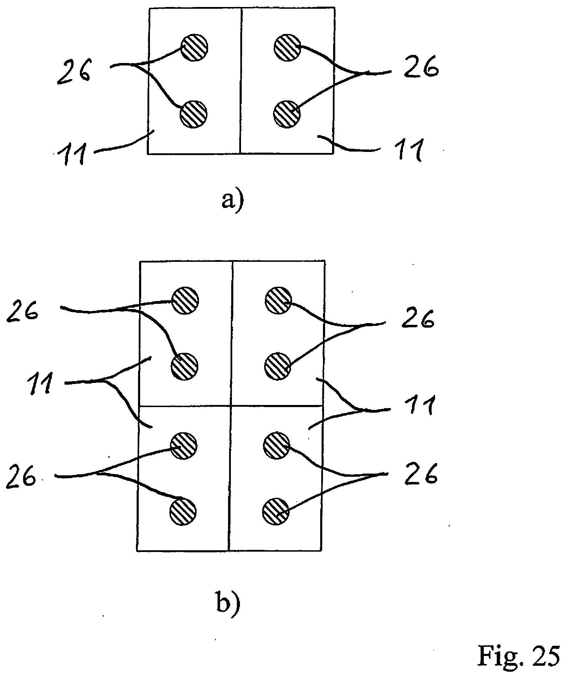

Figur 25a) und b) lässt eine andere Ausführungsform erkennen, bei der pro Formeinsatz 11 zwei Spritzgussdüsen 26 der düsenseitigen Werkzeughälfte 2 vorhanden sind. Damit lassen sich einerseits größere Formteile herstellen. Andererseits lässt sich auf diese Weise auch eine höhere Fachzahl, d. h. eine höhere Teilezahl pro Formeinsatz, verwirklichen. Denkbar ist dabei eine Ausführungsform gemäß Figur 25a), bei der insgesamt vier Spritzgussdüsen 26 für zwei nebeneinander liegende Formeinsätze 11 vorgesehen ist.

Die Anzahl der Formeinsätze 11 kann aber weiter vergrößert werden, so dass beispielsweise wie in Figur 25b) gezeigt zwei Paare von nebeneinander liegenden Formeinsätzen 11 übereinander liegend angeordnet und mit jeweils zwei übereinander liegenden Spritzgussdüsen 26 versorgt werden. Alternativ ist natürlich auch eine Ausführungsform denkbar, bei der die Spritzgussdüsen 26 für einen Formeinsatz 11 nicht übereinander, sondern nebeneinander angeordnet sind.

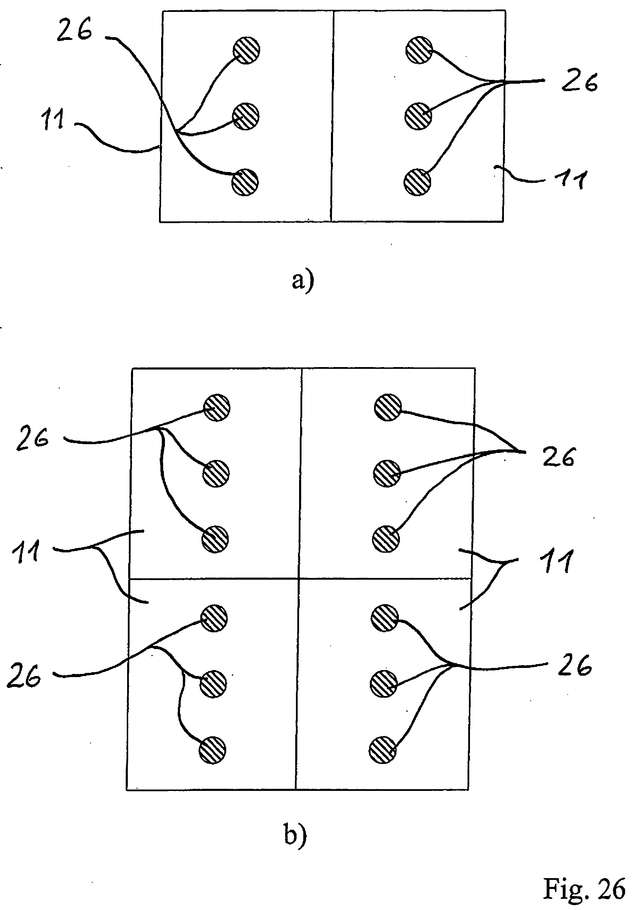

Figur 26a) und b) lässt eine weitere Ausführungsform erkennen, bei der pro Formeinsatz 11 eine Anzahl von drei z. B. übereinander oder nebeneinander liegenden Spritzgussdüsen 26 vorgesehen ist. Für den Fall, dass die düsenseitige Werkzeughälfte sechs Spritzgussdüsen 26 hat, lassen sich zwei nebeneinander liegende Formeinsätze gleichzeitig mit Spritzgussmaterial versorgen.

Denkbar ist aber auch eine Ausführungsform gemäß Figur 26b), bei der die Anordnung aus Figur 26a) dupliziert ist und jeweils zwei nebeneinander liegende Formeinsatzhälften untereinander angeordnet sind.

In entsprechender Weise sind auch weitere Variationen denkbar, bei der eine noch größere Anzahl von Spritzgussdüsen vorhanden ist und/oder bei denen mindestens eine Spritzgussdüse 26 der oben dargestellten Ausführungsform zur Versorgung von zwei oder mehr Formeinsätzen 11 gleichzeitig vorgesehen ist. So ist denkbar, dass in den Ausführungsformen gemäß Figur 24 bis 26 mindestens eine Spritzgussdüse vorgesehen ist, die wie in Figur 23 zwei nebeneinander liegende Formeinsätze 11 zusammen mit Spritzgussmaterial versorgt.

## Patentansprüche

1. Spritzgusswerkzeug (1) für eine Schließeinheit einer Spritzgussmaschine zur Herstellung von Spritzguss-Formteilen mit einem Rahmenwerkzeug, bestehend aus einer ersten, düsenseitigen Werkzeughälfte (2) zum Anbau an eine düsenseitige, feste Aufspannplatte der Schließeinheit einer Spritzgussmaschine und einer zweiten, auswerferseitigen Werkzeughälfte (3) zum Anbau an eine auswerferseitige, bewegliche Aufspannplatte der Schließeinheit der Spritzgussmaschine und die zweite, auswerferseitige Werkzeughälfte (3) mindestens eine Auswerfereinheit (4) hat, und wobei mindestens ein jeweils aus zwei Formeinsatzhälften gebildeter Formeinsatz (11) mit mindestens einer auf ein Formteil angepassten Kavität (58) vorgesehen ist, wobei die erste, düsenseitige Formeinsatzhälfte (51) eines Formeinsatzes (11) zur Verbindung mit der ersten, düsenseitigen Werkzeughälfte (2) und die zweite, auswerferseitige Formeinsatzhälfte (50) desselben Formeinsatzes (11) zur Verbindung mit der zweiten, auswerferseitigen Werkzeughälfte (3) angepasst ist
**dadurch gekennzeichnet, dass**
die erste, düsenseitige Werkzeughälfte (2) mindestens eine mit einer an die düsenseitige Aufspannplatte anschließbaren Maschinendüse der Spritzgussmaschine zusammenwirkende Spritzgussmaterial-Verteileinheit (40) mit einem Verteilerkanal und mindestens einer von der ersten, düsenseitigen Werkzeughälfte (2) in Richtung der zweiten, auswerferseitigen Werkzeughälfte (3) herausragenden Spritzgussdüse (26) hat und der Verteilerkanal von einer Einlassöffnung (30) zum Anschluss der Maschinendüse der Spritzgussmaschine zu der mindestens einen Spritzgussdüse (26) führt,
die Formeinsatzhälften (50, 51) des mindestens einen Formeinsatzes (11) in Einschubrahmen (9, 10) eingebaut sind und die Einschubrahmen (9, 10) zu einem von dem Rahmenwerkzeug abnehmbaren Einschubmodul (8) miteinander verbindbar sind, und dass der düsenseitige Einschubrahmen (9) mindestens eine Düsenöffnung zur Aufnahme jeweils einer zugeordneten Spritzgussdüse (26) der ersten düsenseitigen Werkzeughälfte (2) hat.

2. Spritzgusswerkzeug (1) nach Anspruch 1, **dadurch gekennzeichnet, dass** die zwei-te, auswerferseitige Formeinsatzhälfte (50) ein verschiebbar gelagertes Auswer-ferpaket (49, 60) hat und der auswerferseitige Einschubrahmen (10) mindestens eine Öffnung zur Aufnahme des Auswerferpakets (49, 60) einer zugeordneten zweiten, auswerferseitigen Formeinsatzhälfte (50) hat.

3. Spritzgusswerkzeug (1) nach Anspruch 1 oder 2, **dadurch gekennzeichnet, dass** der auswerferseitige Einschubrahmen (10) mindestens einen hervorstehenden Spritzguss-Verteilerkopf (42) hat, der zur Anordnung gegenüberliegend zu einer zugeordneten Spritzgussdüse (26) ausgerichtet ist und an seinem freien Kopfende Kanäle (43) zum Leiten von aus der zugeordneten Spritzgussdüse (26) austretenden Spritzgussmaterials in Kavitäten (58) von mindestens einem Formeinsatz (11) hat.

4. Spritzgusswerkzeug (1) nach Anspruch 3, **dadurch gekennzeichnet, dass** der Spritzguss-Verteilerkopf (42) einen linear beweglich in oder auf dem Spritzguss-Verteilerkopf (42) angeordneten Angussauswerfer (59, 66) hat.

5. Spritzgusswerkzeug (1) nach Anspruch 3 oder 4, **dadurch gekennzeichnet, dass** der Spritzguss-Verteilerkopf (42) drehbar zur Anpassung der Ausrichtung der am freien Kopfende angeordneten Kanäle (43) ist.

6. Spritzgusswerkzeug (1) nach einem der vorhergehenden Ansprüche, **dadurch gekennzeichnet, dass** sich beidseits von einer der ersten oder zweiten Werkzeughälfte (2, 3) Führungsprofile (7) in Richtung der anderen Werkzeughälfte (3, 2) erstrecken und die andere Werkzeughälfte (3, 2) an den Führungsprofilen (7) linear verschiebbar geführt ist, und dass das Einschubmodul (8) in den Zwischenraum zwischen der ersten und zweiten Werkzeughälfte (2, 3) und dem beidseits sich zwischen erster und zweiter Werkzeughälfte (2, 3) erstreckenden Führungsprofilen (7) einführbar ist.

7. Spritzgusswerkzeug (1) nach Anspruch 6, **gekennzeichnet durch** mindestens eine Messeinheit (21) an einer Seitenwand einer Werkzeughälfte (2), die auf das freie Ende eines zugeordneten Führungsprofils (7), das fest mit der anderen Werkzeughälfte (3) verbunden ist, ausgerichtet ist und zur Überprüfung des Schließdrucks des Spritzgusswerkzeuges (1) mit dem freien Ende zusammenwirkt.

8. Spritzgusswerkzeug (1) nach einem der vorhergehenden Ansprüche, **dadurch gekennzeichnet, dass** sich im unteren Bereich einer Werkzeughälfte (3) Führungsprofile (6) in Richtung der anderen Werkzeughälfte (2) erstrecken und die andere Werkzeughälfte (2) gleitend verschiebbar auf oder an den Führungsprofilen (6) gelagert und von den Führungsprofilen (6) im Umrüstvorgang mindestens teilweise getragen ist.

9. Spritzgusswerkzeug (1) nach einem der vorhergehenden Ansprüche, **dadurch gekennzeichnet, dass** die zweite, auswerferseitige Werkzeughälfte (3) eine Standard-Auswerfereinheit (4) mit standardisierten beweglichen Auswerferelementen (32) hat, die sich zur Betätigung mindestens einer individualisierten Auswerfereinheit (48) des mindestens einen zugeordneten Formeinsatzes (11) in Richtung der ersten, düsenseitigen Werkzeughälfte (2) beweglich erstrecken.

10. Spritzgusswerkzeug (1) nach einem der vorhergehenden Ansprüche, **dadurch gekennzeichnet, dass** die erste, düsenseitige Werkzeughälfte (2) angrenzend an das Einschubmodul (8) eine düsenseitige Formplatte (15) hat, die mit mindestens einer weiteren Platte (16, 17, 18) der ersten, düsenseitigen Werkzeughälfte (2) verbindbar und wahlweise für den Umrüstvorgang von der mindestens einen weiteren Platte (16, 17, 18) der ersten, düsenseitigen Werkzeughälfte (2) lösbar und unter Belassung eines Zwischenraums für das Einschubmodul (8) mit der zweiten, auswerferseitigen Werkzeughälfte (3) verbindbar ist.

11. Spritzgusswerkzeug (1) nach Anspruch 10, **dadurch gekennzeichnet, dass** beidseits an der düsenseitigen Formplatte (15) schwenkbare Verriegelungshebel (22) zur Verriegelung wahlweise mit einer weiteren Platte (16, 17, 18) der ersten, düsenseitigen Werkzeughälfte (2) oder mit der zweiten, auswerferseitigen Werkzeughälfte (3) angeordnet sind.

12. Spritzgusswerkzeug (1) nach einem der vorhergehenden Ansprüche, **dadurch gekennzeichnet, dass** die Formeinsatzhälften (50, 51) jeweils Temperierkanäle (57) mit damit kommunizierenden Ein- und Auslässen zur Durchleitung von Fluid zur Kühlung oder Erwärmung des Formeinsatzes (11) haben.

13. Spritzgusswerkzeug (1) nach einem der vorhergehenden Ansprüche, **dadurch gekennzeichnet, dass** Formeinsätze (11) beweglich gelagerte Schieberelemente zur Entformung von Hinterschnitten aufweisenden Formteilen haben.

14. Spritzgusswerkzeug (1) nach einem der vorhergehenden Ansprüche, **dadurch gekennzeichnet, dass** zwischen den Einschubrahmen (9, 10) und den Formeinsätzen (11) wärmeisolierende Platten (46), wärmeisolierende Zwischenlagen (91) und / oder Abstandsplatten (90) zur Reduzierung von Wärmetransfer angeordnet sind.

15. Verfahren zur Umrüstung eines Spritzgusswerkzeuges (1) nach einem der vorhergehenden Ansprüche an einer Spritzgussmaschine, **gekennzeichnet durch** die Schritte:
- Öffnen der Schließeinheit **durch** Verfahren der zweiten, auswerferseitigen Werkzeughälfte (3) in eine Richtung weg von der ersten, düsenseitigen Werkzeughälfte (2);
- Lösen des düsenseitigen Einschubrahmens (9) von der ersten, düsenseitigen Werkzeughälfte (2) und Lösen des auswerferseitigen Einschubrahmens (10) von der zweiten, auswerferseitigen Werkzeughälfte (3);
- Schließen der Schließeinheit der Spritzgussmaschine **durch** Verfahren der zweiten, auswerferseitigen Werkzeughälfte (3) in Richtung der ersten, düsenseitigen Werkzeughälfte (2);
- Abkoppeln einer düsenseitigen Formplatte (15) der ersten, düsenseitigen Werkzeughälfte (2) von den weiteren Elementen der ersten, düsenseitigen Werkzeughälfte (2) und Ankoppeln dieser düsenseitigen Formplatte (15) an die zweite, auswerferseitige Werkzeughälfte (3);
- Öffnen der Schließeinheit **durch** Verfahren der zweiten, auswerferseitigen Werkzeughälfte (3) in eine Richtung weg von der ersten, düsenseitigen Werkzeughälfte (2);
- Herausheben des **durch** Setzen einer Brücke zwischen den Einschubrahmen gebildeten Einschubmoduls (8) aus dem Rahmenwerkzeug;
- Einführen eines anderen Einschubmoduls (8) in das Rahmenwerkzeug;
- Schließen der Schließeinheit **durch** Verfahren der zweiten, auswerferseitigen Werkzeughälfte (3) in Richtung der ersten, düsenseitigen Werkzeughälfte (2);
- Abkoppeln der düsenseitigen Formplatte (15) von der zweiten, auswerferseitigen Werkzeughälfte (3) und Ankoppeln der düsenseitigen Formplatte (15) an die erste, düsenseitigen Werkzeughälfte (2);
- Öffnen der Schließeinheit nach Lösen der Brücke zur Vereinzelung der Einschubrahmen (9, 10) **durch** Verfahren der zweiten, auswerferseitigen Werkzeughälfte (3) in eine Richtung weg von der ersten, düsenseitigen Werkzeughälfte (2); und
- Verbinden des düsenseitigen Einschubrahmens (9) mit der ersten, düsenseitigen Werkzeughälfte (2) und des auswerferseitigen Einschubrahmens (10) mit der zweiten, auswerferseitigen Werkzeughälfte (3).

## Claims

1. Injection-molding tool (1) for a clamping unit of an injection-molding machine for producing injection-molded parts, comprising a frame tool, consisting of a first, nozzle-side tool half (2), for attachment to a nozzle-side, fixed platen of the clamping unit of an injection-molding machine, and a second, ejector-side tool half (3), for attachment to an ejector-side movable platen of the clamping unit of the injection-molding machine, wherein the second, ejector-side tool half (3) has at least one ejector unit (4), and wherein at least one mold insert (11) respectively formed by two mold insert halves and having at least one cavity (58) adapted to a molded part is provided, wherein the first, nozzle-side mold insert half (51) of a mold insert (11) is adapted for connection to the first, nozzle-side tool half (2) and the second, ejector-side mold insert half (50) of the same mold insert (11) is adapted for connection to the second, ejector-side tool half (3),
**characterized in that**
the first, nozzle-side tool half (2) has at least one injection-molding material distributing unit (40), which interacts with a machine nozzle of the injection-molding machine that can be attached to the nozzle-side platen and which has a runner and at least one injection-molding nozzle (26), protruding from the first, nozzle-side tool half (2) in the direction of the second, ejector-side tool half (3), wherein the runner leads from an inlet opening (30) for the attachment of the machine nozzle of the injection-molding machine to the at least one injection-molding nozzle (26),
the mold insert halves (50, 51) of the at least one mold insert (11) are fitted in slide-in frames (9, 10) and the slide-in frames (9, 10) can be connected to one another to form a slide-in module (8) that can be removed from the frame tool, and **in that** the nozzle-side slide-in frame (9) has at least one nozzle opening for respectively receiving an assigned injection-molding nozzle (26) of the first, nozzle-side tool half (2).

2. Injection-molding tool (1) according to claim 1, **characterized in that** the second, ejector-side mold insert half (50) has a displaceably mounted ejector assembly (49, 60) and the ejector-side slide-in frame (10) has at least one opening for receiving the ejector assembly (49, 60) of an assigned second, ejector-side mold insert half (50).

3. Injection-molding tool (1) according to claim 1 or 2, **characterized in that** the ejector-side slide-in frame (10) has at least one projecting injection-molding manifold head (42), which is aligned for arrangement opposite an assigned injection-molding nozzle (26) and, at its free head end, has runners (43) for conducting injection-molding material emerging from the assigned injection-molding nozzle (26) into cavities (58) of at least one mold insert (11).

4. Injection-molding tool (1) according to claim 3, **characterized in that** the injection-molding manifold head (42) has a sprue ejector (59, 66) arranged in a linearly movable manner in or on the injection-molding manifold head (42).

5. Injection-molding tool (1) according to claim 3 or 4, **characterized in that** the injection-molding manifold head (42) is rotatable for adaptation of the alignment of the runners (43) arranged at the free head end.

6. Injection-molding tool (1) according to one of the preceding claims, **characterized in that**, on both sides of the first or second tool half (2, 3), guiding profiles (7) extend in the direction of the other tool half (3, 2) and the other tool half (3, 2) is guided in a linearly displaceable manner on the guiding profiles (7), and **in that** the slide-in module (8) can then be inserted into the intermediate space between the first and second tool halves (2, 3) and the guiding profiles (7) extending on both sides between the first and second tool halves (2, 3).

7. Injection-molding tool (1) according to claim 6, **characterized by** at least one measuring unit (21), which is on a side wall of a tool half (2), is aligned with the free end of an assigned guiding profile (7), which is fixedly connected to the other tool half (3), and interacts with the free end to verify the clamping pressure of the injection-molding tool (1).

8. Injection-molding, tool (1) according to one of the preceding claims, **characterized in that** guiding profiles (6) extend in the lower region of one tool half (3) in the direction of the other tool half (2) and the other tool half (2) is mounted in a slidingly displaceable manner on the guiding profiles (6) and is at least partially carried by the guiding profiles (6) in the modifying process.

9. Injection-molding tool (1) according to one of the preceding claims, **characterized in that** the second, ejector-side tool half (3) has a standard ejector unit (4) with standardized movable ejector elements (32), which extend movably in the direction of the first, nozzle-side tool half (2) for the actuation of at least one individualized ejector unit (48) of the at least one assigned mold insert (11).

10. Injection-molding tool (1) according to one of the preceding claims, **characterized in that** the first, nozzle-side tool half (2) has adjacent to the slide-in module (8) a nozzle-side mold plate (15), which can be connected to at least one further plate (16, 17, 18) of the first, nozzle-side tool half (2) and, for the modifying process, can optionally be detached from the at least one further plate (16, 17, 18) of the first, nozzle-side tool half (2) and can be connected to the second, ejector-side tool half (3), while leaving an intermediate space for the slide-in module (8).

11. Injection-molding tool (1) according to claim 10, **characterized in that** pivotable locking levers (22) are arranged on both sides of the nozzle-side mold plate (15) for locking optionally to a further plate (16, 17, 18) of the first, nozzle-side tool half (2) or to the second, ejector-side tool half (3).

12. Injection-molding tool (1) according to one of the preceding claims, **characterized in that** the mold insert halves (50, 51) respectively have temperature-control channels (57) with inlets and outlets communicating therewith for conducting through fluid for cooling or heating the mold insert (11).

13. Injection-molding tool (1) according to one of the preceding claims, **characterized in that** mold inserts (11) have movably mounted slide elements for demolding molded parts that have undercuts.

14. Injection-molding tool (1) according to one of the preceding claims, **characterized in that** heat-insulating panels (46), heat-insulating intermediate layers (91) and/or spacing panels (90) are arranged between the slide-in frames (9, 10) and the mold inserts (11) to reduce heat transfer.

15. Method for modifying an injection-molding tool (1) according to one of the preceding claims on an injection-molding machine, **characterized by** the steps of:
- opening the clamping unit by moving the second, ejector-side tool half (3) in a direction away from the first, nozzle-side tool half (2);
- detaching the nozzle-side slide-in frame (9) from the first, nozzle-side tool half (2) and detaching the ejector-side slide-in frame (10) from the second, ejector-side tool half (3);
- closing the clamping unit of the injection-molding machine by moving the second, ejector-side tool half (3) in the direction of the first, nozzle-side tool half (2);
- uncoupling a nozzle-side mold plate (15) of the first, nozzle-side tool half (2) from the further elements of the first, nozzle-side tool half (2) and coupling this nozzle-side mold plate (15) to the second, ejector-side tool half (3) ;
- opening the clamping unit by moving the second, ejector-side tool half (3) in a direction away from the first, nozzle-side tool half (2);
- lifting the slide-in module (8) formed by setting a bridge between the slide-in frames out from the frame tool;
- inserting another slide-in module (8) into the frame tool;
- closing the clamping unit by moving the second, ejector-side tool half (3) in the direction of the first, nozzle-side tool half (2);
- uncoupling the nozzle-side mold plate (15) from the second, ejector-side tool half (3) and coupling the nozzle-side mold plate (15) to the first, nozzle-side tool half (2);
- opening the clamping unit by detaching the bridge for individualizing the slide-in frames (9, 10) by moving the second, ejector-side tool half (3) in a direction away from the first, nozzle-side tool half (2); and
- connecting the nozzle-side slide-in frame (9) to the first, nozzle-side tool half (2) and the ejector-side slide-in frame (10) to the second, ejector-side tool half (3).

## Revendications

1. Outil de moulage par injection (1) pour une unité de fermeture d'une machine de moulage par injection destinée à la fabrication de pièces moulées par injection avec un outil à cadre, se composant d'une première moitié d'outil côté buses (2) à monter sur une plaque de serrage fixe côté buses de l'unité de fermeture d'une machine de moulage par injection et d'une deuxième moitié d'outil côté éjecteur (3) à monter sur une plaque de serrage mobile côté éjecteur de l'unité de fermeture de la machine de moulage par injection, et la deuxième moitié d'outil côté éjecteur (3) comporte au moins une unité d'éjecteur (4), et dans lequel il est prévu au moins un insert de moulage (11) formé chaque fois de deux moitiés d'insert de moulage avec au moins une cavité (58) adaptée à une pièce moulée, dans lequel la première moitié d'insert de moulage côté buses (51) d'un insert de moulage (11) est adaptée pour l'assemblage avec la première moitié d'outil côté buses (2) et la deuxième moitié d'insert de moulage côté éjecteur (50) de ce même insert de moulage (11) est adaptée pour l'assemblage avec la deuxième moitié d'outil côté éjecteur (3),
**caractérisé en ce que**
la première moitié d'outil côté buses (2) comporte au moins une unité de répartition du matériau de moulage par injection (40) coopérant avec une buse de machine de la machine de moulage par injection pouvant être raccordée à la plaque de serrage côté buses, avec un canal de répartiteur et au moins une buse de moulage par injection (26) sortant de la première moitié d'outil côté buses (2) en direction de la deuxième moitié d'outil côté éjecteur (3) et le canal de répartiteur conduit d'une ouverture d'entrée (30) pour le raccord de la buse de machine de la machine de moulage par injection jusqu'à ladite au moins une buse de moulage par injection (26),
les moitiés d'insert de moulage (50, 51) dudit au moins un insert de moulage (11) sont montées dans des cadres insérables (9, 10) et les cadres insérables (9, 10) peuvent être assemblés l'un à l'autre en un module insérable (8) pouvant être retiré de l'outil à cadre, et **en ce que** le cadre insérable côté buses (9) présente au moins une ouverture de buse destinée à recevoir chaque fois une buse de moulage par injection associée (26) de la première moitié d'outil côté buses (2).

2. Outil de moulage par injection (1) selon la revendication 1, **caractérisé en ce que** la deuxième moitié d'insert de moulage côté éjecteur (50) comporte un paquet d'éjecteurs (49, 60) monté de façon déplaçable et le cadre insérable côté éjecteur (10) présente au moins une ouverture destinée à recevoir le paquet d'éjecteurs (49, 60) d'une deuxième moitié d'insert de moulage côté éjecteur associée (50).

3. Outil de moulage par injection (1) selon la revendication 1 ou 2, **caractérisé en ce que** le cadre insérable côté éjecteur (10) comporte au moins une tête de répartiteur de moulage par injection saillante (42), qui est orientée pour l'agencement en face d'une buse de moulage par injection associée (26) et qui présente à son extrémité de tête libre des canaux (43) pour le guidage de matériaux de moulage par injection sortant de la buse de moulage par injection associée (26) dans des cavités (58) d'au moins un insert de moulage (11).

4. Outil de moulage par injection (1) selon la revendication 3, **caractérisé en ce que** la tête de répartiteur de moulage par injection (42) comporte un éjecteur de carotte (59, 66) mobile linéairement disposé dans ou sur la tête de répartiteur de moulage par injection (42).

5. Outil de moulage par injection (1) selon la revendication 3 ou 4, **caractérisé en ce que** la tête de répartiteur de moulage par injection (42) est rotative en vue de l'adaptation de l'orientation des canaux (43) disposés dans l'extrémité de tête libre.

6. Outil de moulage par injection (1) selon l'une quelconque des revendications précédentes, **caractérisé en ce que** des profilés de guidage (7) s'étendent de part et d'autre d'une de la première ou de la deuxième moitié d'outil (2, 3) en direction de l'autre moitié d'outil (3, 2) et l'autre moitié d'outil (3, 2) est guidée en mouvement linéaire sur les profilés de guidage (7), et **en ce que** le module insérable (8) peut être introduit dans l'espace intermédiaire entre la première et la deuxième moitié d'outil (2, 3) et les profilés de guidage (7) s'étendant de part et d'autre entre la première et la deuxième moitié d'outil (2, 3).

7. Outil de moulage par injection (1) selon la revendication 6, **caractérisé par** au moins une unité de mesure (21) sur une paroi latérale d'une moitié d'outil (2), qui est orientée vers l'extrémité libre d'un profilé de guidage associé (7), qui est fixement assemblé à l'autre moitié d'outil (3), et coopère avec l'extrémité libre pour vérifier la pression de fermeture de l'outil de moulage par injection (1).

8. Outil de moulage par injection (1) selon l'une quelconque des revendications précédentes, **caractérisé en ce que** des profilés de guidage (6) s'étendent dans la région inférieure d'une moitié d'outil (3) en direction de l'autre moitié d'outil (2) et l'autre moitié d'outil (2) est montée en mouvement glissant sur ou aux profilés de guidage (6) et est portée au moins partiellement par les profilés de guidage (6) dans le procédé de rééquipement.

9. Outil de moulage par injection (1) selon l'une quelconque des revendications précédentes, **caractérisé en ce que** la deuxième moitié d'outil côté éjecteur (3) comporte une unité d'éjecteur normale (4) avec des éléments d'éjecteur mobiles normalisés (32), qui s'étendent de façon mobile en direction de la première moitié d'outil côté buses (2) pour l'actionnement d'au moins une unité d'éjecteur individualisée (48) dudit au moins un insert de moulage associé (11).

10. Outil de moulage par injection (1) selon l'une quelconque des revendications précédentes, **caractérisé en ce que** la première moitié d'outil côté buses (2) présente, en position adjacente au module insérable (8), une plaque de moulage côté buses (15), qui peut être assemblée à au moins une autre plaque (16, 17, 18) de la première moitié d'outil côté buses (2) et qui peut au choix, pour le rééquipement de ladite au moins une autre plaque (16, 17, 18) de la première moitié d'outil côté buses (2), être assemblée à la deuxième moitié d'outil côté éjecteur (3) de façon séparable et en laissant un espace intermédiaire pour le module insérable (8).

11. Outil de moulage par injection (1) selon la revendication 10, **caractérisé en ce que** des leviers de verrouillage pivotants (22) sont disposés de part et d'autre de la plaque de moulage côté buses (15) pour le verrouillage au choix avec une autre plaque (16, 17, 18) de la première moitié d'outil côté buses (2) ou avec la deuxième moitié d'outil côté éjecteur (3).

12. Outil de moulage par injection (1) selon l'une quelconque des revendications précédentes, **caractérisé en ce que** les moitiés d'insert de moulage (50, 51) présentent respectivement des canaux d'équilibrage de la température (57) avec des entrées et des sorties communiquant avec celles-ci pour le passage de fluide destiné au refroidissement ou au chauffage de l'insert de moulage (11).

13. Outil de moulage par injection (1) selon l'une quelconque des revendications précédentes, **caractérisé en ce que** les inserts de moulage (11) comportent des éléments de glissement montés de façon mobile pour le démoulage de pièces moulées présentant des contredépouilles.

14. Outil de moulage par injection (1) selon l'une quelconque des revendications précédentes, **caractérisé en ce que** des plaques thermo-isolantes (46), des couches intermédiaires thermo-isolantes (91) et/ou des plaques d'écartement (90) sont disposées entre les cadres insérables (9, 10) et les inserts de moulage (11) en vue de la réduction du transfert de chaleur.

15. Procédé de rééquipement d'un outil de moulage par injection (1) selon l'une quelconque des revendications précédentes sur une machine de moulage par injection, **caractérisé par** les étapes suivantes :
- ouverture de l'unité de fermeture par déplacement de la deuxième moitié d'outil côté éjecteur (3) dans une direction s'éloignant de la première moitié d'outil côté buses (2) ;
- enlèvement du cadre insérable côté buses (9) de la première moitié d'outil côté buses (2) et enlèvement du cadre insérable côté éjecteur (10) de la deuxième moitié d'outil côté éjecteur (3) ;
- fermeture de l'unité de fermeture de la machine de moulage par injection par déplacement de la deuxième moitié d'outil côté éjecteur (3) en direction de la première moitié d'outil côté buses (2) ;
- découplage d'une plaque de moulage côté buses (15) de la première moitié d'outil côté buses (2) des autres éléments de la première moitié d'outil côté buses (2) et couplage de cette plaque de moulage côté buses (15) à la deuxième moitié d'outil côté éjecteur (3) ;
- ouverture de l'unité de fermeture par déplacement de la deuxième moitié d'outil côté éjecteur (3) dans une direction s'éloignant de la première moitié d'outil côté buses (2) ;
- levage du module insérable (8) formé par la pose d'un pont entre les cadres insérables hors de l'outil à cadre ;
- introduction d'un autre module insérable (8) dans l'outil à cadre ;
- fermeture de l'unité de fermeture par déplacement de la deuxième moitié d'outil côté éjecteur (3) en direction de la première moitié d'outil côté buses (2) ;
- découplage de la plaque de moulage côté buses (15) de la deuxième moitié d'outil côté éjecteur (3) et couplage de la plaque de moulage côté buses (15) à la première moitié d'outil côté buses (2) ;
- ouverture de l'unité de fermeture après enlèvement du pont pour isoler les cadres insérables (9, 10) par déplacement de la deuxième moitié d'outil côté éjecteur (3) dans une direction s'éloignant de la première moitié d'outil côté buses (2) ; et
- assemblage du cadre insérable côté buses (9) avec la première moitié d'outil côté buses (2) et du cadre insérable côté éjecteur (10) avec la deuxième moitié d'outil côté éjecteur (3).
